# EUROPEAN PATENT APPLICATION

(11) **EP 4 726 890 A1**
(43) Date of publication of application: **15.04.2026**
(21) Application number: 24818603.3
(22) Date of filing: 03.06.2024
(51) Int. Cl.: H01M 50/271, H01M 50/55

(54) **HIGH-CAPACITY BATTERY, BATTERY CELL, SEALING CONNECTOR, AND UPPER COVER ASSEMBLY**

(30) Priority: 06.06.2023 CN 202310662889; 06.06.2023 CN 202310662887; 06.07.2023 CN 202310824582; 14.10.2023 CN 202322755510 U
(71) Applicant: D-Aus Energy Storage Technology (Xi'an) Co., Ltd, Xi' An, Shaanxi 710075 (CN)
(72) Inventor: LEI, Zhengjun, Shaanxi 710075 (CN); CHEN, Mengqi, Shaanxi 710075 (CN)
(74) Representative: Zermani Biondi Orsi, Umberto
(86) International application number: PCT/CN2024/096997
(87) International publication number: WO 2024/251071

(57) **Abstract**

The present invention relates to the field of batteries, and particularly to a high-capacity battery, a battery cell, a sealing connector, and an upper cover assembly. The problem of poor uniformity of battery cells in existing battery modules is solved. The large-capacity battery comprises a case and a plurality of battery cells; the plurality of battery cells are arranged side by side, and are arranged in the case as a whole; pole clearance holes, i.e., first through holes, are formed at the positions, corresponding to polarity terminals of each battery cell, of the top of the case; the polarity terminals of the battery cells extend out of the top of the case through the corresponding pole clearance holes, i.e., first through holes, and are used for realizing parallel connection between the battery cells; tubular members to be welded, i.e., hollow members, are provided between the upper cover assembly of each battery cell and the pole clearance holes, i.e., first through holes, corresponding to the battery cell on the top of the case; electrolyte areas of the battery cells are communicated with each other, so that the battery cells are located in one electrolyte system. During operation of the high-capacity battery, the consumption of electrolyte is always consistent in the battery cells, thereby improving the consistency of the battery cells in the large-capacity battery, and ensuring the cycle life of the high-capacity battery.

## Description

### Technical Field

The present invention relates to the technical field of batteries, and in particular to a high-capacity battery, a battery cell, a sealing connector, and an upper cover assembly.

### Background

In order to meet the requirements of high-capacity charging and discharging, an existing manner is to form a battery module by connecting a plurality of battery cells in series, in parallel or in a series-parallel combined manner.

However, since the battery cells in the battery module have differences themselves, there is a difference in the consumption of electrolyte by the battery cells in the battery module, which in turn results in relatively poor uniformity of the battery cells in the battery module, and thus directly affecting the cycle life of the battery module. Therefore, how to improve the uniformity of the battery cells in the battery module has become key and difficult points of researches in the field.

### Summary

In order to solve the problem of poor uniformity of battery cells in an existing battery module, the present invention provides the following four embodiments:

### First embodiment:

One aspect of the first embodiment of the present invention provides a high-capacity battery, including a housing and a battery cell, a plurality of battery cells are provided, wherein the plurality of battery cells are arranged side by side and are integrally arranged in the housing; the battery cell has an electrolyte region and a gas region therein; and the electrolyte regions of the plurality of battery cells communicate with each other, so that the plurality of battery cells are located in one electrolyte system;
a first through hole is formed in a top of the housing at a position corresponding to an electrode terminal of each battery cell of the plurality of battery cells;
the electrode terminal of the battery cell extends out of the top of the housing via the corresponding first through hole, so as to implement a parallel connection between the plurality of battery cells;
a hollow member is arranged between an upper cover assembly of the battery cell and the first through hole at the top of the housing that corresponds to the battery cell; and
the hollow member is sleeved on the electrode terminal, a top of the hollow member is fixedly connected with the upper cover assembly of the battery cell, a bottom of the hollow member is in tight fit with the first through hole, and the hollow member and the first through hole are welded and sealed by laser fusion welding; and a fusion welding region between the hollow member and the first through hole is located between an outer edge of the top of the hollow member and an inner edge of the first through hole.

In the first embodiment of the present invention, since the electrolyte regions of the plurality of battery cells located in the housing communicate with each other, one electrolyte system is formed, that is, the plurality of battery cells are located in one electrolyte sharing system, therefore during an operation of the high-capacity battery, the consumption of electrolyte in the plurality of battery cells is always consistent, thereby improving a consistency of the plurality of battery cells in the high-capacity battery, and thus ensuring a cycle life of the high-capacity battery.

In the first embodiment of the present invention, since the plurality of battery cells in the housing are located in one electrolyte system, it is necessary to ensure a sealing property between an interior of the housing and an external environment, in particular the sealing property at the first through hole in the top of the housing. In the present invention, the hollow member is used and is sleeved on the electrode terminal of the battery cell, the bottom of the hollow member is fixed on the upper cover assembly of the battery cell, it is ensured that the top of the hollow member is tightly attached to the first through hole in a transition or interference fit manner, and finally an outer edge of the top of the hollow member is welded and sealed with an inner edge of the first through hole by simple and reliable laser fusion welding, which is easy to operate, and the sealing property at the first through hole after welding is stable and reliable.

In the first embodiment of the present invention, in order to facilitate a processing and manufacturing, the hollow member is integrally formed on the upper cover assembly of the battery cell.

In the first embodiment of the present invention, a side wall of the hollow member is provided with a buffer deformation groove. The buffer deformation groove not only provides a deformation margin for hermetical fixing, but also may compensate for a coaxiality deviation between the electrode terminal of the battery cell and the first through hole corresponding thereto, and the deformation margin may be configured to solve a problem of inconsistent gaps between the housing and the battery cells; and meanwhile, when the high-capacity battery is subjected to an external force or its own vibration, the buffer deformation groove itself has a buffer effect, thereby ensuring a reliability of the hermetical fixing.

In the first embodiment of the present invention, in order to increase an usage amount of the electrolyte in the electrolyte sharing system and to ensure stronger continuity of the electrolyte in the electrolyte sharing system (avoid an occurrence of an electrolyte shortage phenomenon), the bottom of the housing is provided with a first channel configured to communicate the electrolyte regions in the plurality of battery cells.

In the first embodiment of the present invention, the top of the housing is provided with a second channel for communicating the gas regions in the plurality of battery cells. During an operation of the high-capacity battery, the second channel may serve as a gas balance channel, so that the plurality of battery cells are located in one gas balance system, which improves an uniformity of the plurality of battery cells in terms of gas pressure, thereby further improving a cycle performance of the high-capacity battery; moreover, since an internal pressures of the plurality of battery cells are basically the same, a risk of thermal runaway of a certain battery cell due to an excessively large internal pressure is also greatly reduced, and thus a safety of the high-capacity battery is improved; and if an exhaust valve is additionally arranged on the first channel for regular exhaust, the cycle life of the high-capacity battery may be further prolonged.

In the first embodiment of the present invention, the top of the housing is provided with a second channel covering an explosion venting portion of the upper cover assembly of the battery cell. When thermal runaway occurs in a curtain battery cell, a thermal runaway flue gas breaks through the explosion venting portion to be discharged from the second channel to an external thermal runaway flue gas processing device for timely processing, thereby reducing a probability of occurrence of more serious accidents.

In another aspect of the first embodiment of the present invention further provides a battery cell, which is applied to a high-capacity battery and includes an upper cover assembly, a cylinder body, a lower cover assembly and an electrode assembly, wherein the upper cover assembly, the cylinder body and the lower cover assembly constitute a closed outer cylinder, the electrode assembly is located in the closed outer cylinder, and the closed outer cylinder is filled with electrolyte;
the upper cover assembly includes a cover plate body, and two electrode terminals and a hollow member, which two hollow members are provided, which are arranged on the cover plate body;
the two electrode terminals are respectively connected with a positive electrode sheet and a negative electrode sheet of the electrode assembly, and both are kept insulated from the cover plate body, meanwhile the two hollow members are configured to respectively receive the two electrode terminals passing therethrough, and an outer diameter of the hollow member is less than or equal to an aperture of a first through hole of the high-capacity battery, so that an outer surface of the hollow member may form a tight fit with a hole wall of the first through hole, so as to provide favorable conditions for subsequent hermetical fixing of the hollow member and the first through hole in the top of the housing by laser fusion welding; and
the lower cover assembly is provided with a first sealing and unpacking mechanism configured to form the first through hole in a bottom of the cylinder body, the first sealing and unpacking mechanism has two functions: one function is to seal itself before the battery cells form the high-capacity battery, and the other function is to open the first sealing and unpacking mechanism during the formation of the high-capacity battery, so that the first through holes are formed in the lower cover assemblies of the battery cells, and then electrolyte regions of the battery cells may communicate with each other.

In the first embodiment of the present invention, the hollow member is integrally formed on the cover plate body.

In the first embodiment of the present invention, the cover plate body of the upper cover assembly is provided with a second sealing and unpacking mechanism configured to form a second through hole, and the second sealing mechanism is located between the two electrode terminals. The second sealing and unpacking mechanism has two functions: one function is to seal itself before the battery cells form the high-capacity battery, and the other function is to open the second sealing and unpacking mechanism during the formation of the high-capacity battery, so that the second through holes are formed in the upper cover assemblies of the battery cells, and then gas regions of the battery cells may communicate with each other via the second channel.

In the first embodiment of the present invention, the cover plate body of the upper cover assembly is provided with an explosion venting portion, and the explosion venting portion is located between the two electrode terminals.

### Second embodiment:

A first aspect of the second embodiment of the present invention provides a sealing connector, which is configured to hermetically connect a housing of a high-capacity battery with an upper cover plate of a battery cell of the high-capacity battery, wherein a first through hole configured to enable an electrode terminal of the battery cell of the high-capacity battery to extend out is formed in the housing of the high-capacity battery, wherein a plurality of first through holes are provided; the sealing connector includes a hollow member; a bottom of the hollow member is hermetically connected with a first region of the battery cell of the high-capacity battery, and a top of the hollow member is hermetically connected with a second region of the housing of the high-capacity battery; the first region is a region located at a periphery of an electrode terminal in the upper cover plate of the battery cell of the high-capacity battery; and the second region is a region corresponding to the first through hole on the housing of the high-capacity battery.

In the second embodiment of the present invention, when in use, the hollow member is sleeved on the outer side of the electrode terminal of the battery cell, the bottom is hermetically connected with the upper cover plate of the battery cell, and the top is hermetically connected with the peripheral region of the first through hole on the housing that corresponds to the electrode terminal, therefore no matter whether there is a gap between the housing and the upper cover plate of each battery cell or whether the dimensions of the gaps are different, the hollow member may hermetically fix the housing with the upper cover plate of the battery cell, thereby ensuring the sealing property of the housing of the high-capacity battery, and solving the problem that pseudo welding and even a welding failure may occur when the housing and the upper cover plate of the battery cell are directly welded by laser fusion welding.

In the second embodiment of the present invention, an outer side of the bottom of the hollow member is provided with a first annular plate to be welded with the upper cover plate of the battery cell of the high-capacity battery. When in use, after the hollow member is sleeved on the electrode terminal, the first annular plate is welded on the upper cover plate of the battery cell, and then the top of the hollow member is directly welded with a hole wall of the first through hole, or the top of the hollow member is bent to be welded with a region on the housing that is located at the periphery of the first through hole.

In the second embodiment of the present invention, in order to facilitate the processing and to reduce the number of parts, the hollow member and the first annular plate are integrally formed.

In the second embodiment of the present invention, an outer side of the top of the hollow member is provided with a second annular plate to be welded with the second region, and a third annular plate arranged on an inner side of the bottom of the hollow member to be welded with the first region; and an inner diameter of the third annular plate is greater than an outer diameter of an insulating sealing gasket arranged at the electrode terminal of the battery cell of the high-capacity battery.

When in use, the battery cell may be placed in the housing first, after it is ensured that the battery cell extends out of the first through hole, the hollow member is then placed from the first through hole to ensure that the third annular plate is in contact with the upper cover plate of the battery cell, and after the second annular plate is in contact with an outer surface of the housing, the third annular plate and the first region, and the second annular plate and the second region are respectively welded.

In the second embodiment of the present invention, in order to facilitate the processing and to reduce the number of parts, the hollow member, the second annular plate and the third annular plate are integrally formed.

In the second embodiment of the present invention, a side wall of the hollow member is provided with a buffer deformation groove. The buffer deformation groove not only provides a deformation margin for hermetical fixing, but also may compensate for a coaxiality deviation between the electrode terminal of the battery cell and the first through hole corresponding thereto, and the deformation margin may be configured to solve a problem that an excessively large gap between the housing and the battery cell is not conducive to welding; and meanwhile, when the high-capacity battery is subjected to an external force or its own vibration, the buffer deformation groove itself has a certain buffer effect, thereby ensuring the reliability of the hermetical fixing.

A second aspect of the second embodiment of the present invention provides a high-capacity battery, including a housing and a battery cell, wherein N battery cells are provided, wherein N is greater than or equal to 2; and the N battery cells are arranged in parallel and are integrally arranged in the housing; the housing is provided with an electrolyte sharing chamber in communication with electrolyte regions of the battery cells; and the improvement lies in that:
the high-capacity battery further includes a hollow member provided in the first aspect of the second embodiment of the present invention, wherein 2N hollow members are provided; and
a bottom of the hollow member is hermetically connected with a first region of the battery cell, and a top of the hollow member is hermetically connected with a second region of the housing; and an electrode terminal of the battery cell extends out of the hollow member, and the electrode terminal of the battery cell is kept insulated from the hollow member.

According to the high-capacity battery, the plurality of battery cells may be located in at least one uniform state of gas balance and electrolyte sharing via the sharing chamber, so that the high-capacity battery has a longer cycle life; and moreover, in the high-capacity battery, the housing and the battery cells are hermetically connected by using the hollow members, thereby not only having good sealing property, but also ensuring easy assembly.

The present invention provides the following five embodiments of the high-capacity battery:
1. One sharing chamber is provided, is integrally formed at the bottom of the housing, and communicates with electrolyte regions in inner cavities of the plurality of battery cells, so that the high-capacity battery has an electrolyte sharing function, thereby ensuring the consistency of electrolyte in the plurality of battery cells.
2. One sharing chamber is provided, is integrally formed at the top of the housing, and communicates with gas regions in the inner cavities of the battery cells, so that the high-capacity battery has a gas balance function, thereby ensuring the consistency of gases in the plurality of battery cells.
3. One sharing chamber is provided, is integrally formed at the top of the housing, and covers an explosion venting port of the battery cell, so as to ensure that a thermal runaway flue gas in the battery cell is discharged from the sharing chamber after breaking through the explosion venting port.
4. Two sharing chambers are provided, one sharing chamber is integrally formed at the bottom of the housing and communicates with the electrolyte regions in the inner cavities of the plurality of battery cells, and the other sharing chamber is integrally formed at the top of the housing and communicates with the gas regions in the inner cavities of the plurality of battery cells, so that the high-capacity battery has the electrolyte sharing function and the gas balance function at the same time, thereby greatly improving the consistency of gases in the plurality of battery cells.
5. Two sharing chambers are provided, one sharing chamber is integrally formed at the bottom of the housing and communicates with the electrolyte regions in the inner cavities of the plurality of battery cells, and the other sharing chamber is integrally formed at the top of the housing and covers the explosion venting port of the battery cell, so as to ensure that the thermal runaway flue gas in the battery cell is discharged from the sharing chamber after breaking through the explosion venting port, so that the high-capacity battery has a single battery explosion venting function while having the electrolyte sharing function, thereby improving the safety to a certain extent while ensuring the consistency of the electrolyte in the plurality of battery cells.

### Third embodiment:

A first aspect of the third embodiment of the present invention provides an upper cover assembly, including a cover plate body and an electrode terminal, wherein two electrode terminals are provided, wherein the upper cover assembly further includes a hollow member, wherein two hollow members are provided;
two ends of the hollow member are both open, one open end of the hollow member is connected with an electrode terminal hole of the cover plate body, and another open end of the hollow member is connected with a housing of a high-capacity battery;
the two electrode terminals are correspondingly inserted into the two hollow members;
an insulating sleeve is arranged between the electrode terminal and the hollow member, so as to realize the insulation between the hollow member and the electrode terminal; and
the insulating sleeve is provided with a fixing portion, so that the hollow member and the electrode terminal are hermetically connected by the insulating sleeve.

In the third embodiment of the present invention, in the upper cover assembly, the cover plate body is provided with two hollow members, after a plurality of battery cells are placed in the housing of the high-capacity battery in groups, no matter whether there is a gap between the housing and the upper cover assembly of each battery cell or whether the dimensions of the gaps are different, it is only necessary to hermetically connect the portion of the hollow member on each battery cell that is away from the cover plate body with a region on the housing that corresponds to a first through hole corresponding thereto during operation, thereby ensuring the sealing property of the housing of the high-capacity battery, and solving the problem that pseudo welding and even a welding failure may occur when the housing and the upper cover assembly of the battery cell are directly welded by laser fusion welding in a relevant art.

In the third embodiment of the present invention, in the upper cover assembly, the electrode terminal and the hollow member are reliably insulated by the insulating sleeve, and meanwhile the hollow member and the electrode terminal may also be hermetically connected by the insulating sleeve, so that the upper cover assembly is of an integrated structure, which facilitates subsequent assembly and disassembly.

In the third embodiment of the present invention, in the upper cover assembly, the insulating sleeve formed by an injection molding process may be completely filled in a gap between the hollow member and the electrode terminal, so that the sealing property at the electrode terminal hole on the cover plate body is better, and meanwhile the insulating sleeve formed by the injection molding process is unlikely to fall off, so that the insulation reliability is higher.

In the third embodiment of the present invention, in the upper cover assembly, the fixing portion is composed of a fixing sleeve sleeved on the outer side of the hollow member, and an insulating connection column embedded into a second through hole, and the two ends of the insulating connection column are respectively connected with the fixing sleeve and the insulating sleeve. The fixing portion of this structure may reliably install the insulating sleeve on the hollow structure, and meanwhile may protect the hollow member, thereby avoiding an impact on the subsequent hermetical connection with the housing of the high-capacity battery by a damage or deformation to the hollow member during the process of carrying the battery cell.

In the third embodiment of the present invention, in the upper cover assembly, the fixing portion is a columnar protrusion arranged on an outer wall of the insulating sleeve and embedded into the second through hole, and the fixing portion of this structure is simple in structure and is convenient to process and manufacture.

In the third embodiment of the present invention, in the upper cover assembly, the fixing portion is a first annular protrusion arranged on an outer wall of the insulating sleeve and embedded into a first annular groove, and the fixing portion of this structure is simple in structure and is convenient to install, so that the fixing portion may be very conveniently installed in the hollow member.

In the third embodiment of the present invention, in the upper cover assembly, a second annular boss of the insulating sleeve is embedded into a second annular groove of the electrode terminal, thereby further avoiding the problem of insulation failure caused by the fall-off of the insulating sleeve.

In the third embodiment of the present invention, in the upper cover assembly, a gas hole on the cover plate body is sealed by a sealing and unpacking mechanism that is formed by injection moulding, or the gas hole is provided with an explosion venting portion, so that the upper cover assembly meets a multifunctional usage requirement.

In the third embodiment of the present invention, in the upper cover assembly, the hollow member is integrally formed on the cover plate body. The structure is not only convenient to process and manufacture, but also makes the sealing property of the battery cell better.

In the third embodiment of the present invention, in the upper cover assembly, a portion of the hollow member that is away from the cover plate body is provided with a bent region, which is welded and sealed with a peripheral region of a first through hole on the housing of the high-capacity battery, and the bent region improves the operability and adaptability of the hermetical fixing between the hollow member on the battery cell and the housing.

In the third embodiment of the present invention, in the upper cover assembly, a side wall of the hollow member is provided with a buffer deformation groove. The buffer deformation groove not only provides a certain deformation margin for the hermetical fixing, but also may compensate for a coaxiality deviation between the electrode terminal of the battery cell and the first through hole corresponding thereto, and the deformation margin may be used for solving the problem of the gap between the housing and the battery cell being too large or too small; and meanwhile, when the high-capacity battery is subjected to an external force or its own vibration, the buffer deformation groove itself has a certain buffer effect, thereby ensuring the reliability of the hermetical fixing.

A second aspect of the third embodiment of the present invention provides a battery cell, including an outer cylinder, an upper cover assembly, a lower cover assembly and an electrode assembly, wherein the upper cover assembly is the upper cover assembly described above.

### Fourth embodiment:

A first aspect of the fourth embodiment of the present invention provides an upper cover assembly. The upper cover assembly includes an electrode terminal and a gas hole, wherein two electrode terminals are provided, the gas hole located between the two electrode terminals, wherein the improvement lies in that the upper cover assembly further includes: a cover plate body and a hollow member, wherein two hollow members are provided, the two hollow members arranged on the cover plate body; two ends of the hollow member are both open; and the two electrode terminals are both kept insulated from the cover plate body, the two hollow members are configured to respectively receive the two electrode terminals passing therethrough, and the electrode terminal is kept insulated from the hollow member.

In the present invention, the cover plate body of a battery cell is provided with two hollow members, after a plurality of battery cells are placed in a housing of a high-capacity battery in groups, no matter whether there is a gap between the housing and the upper cover assembly of each battery cell or whether the dimensions of the gaps are different, it is only necessary to hermetically connect the portion of the hollow member on each battery cell that is away from the cover plate body with a region on the housing that corresponds to a first through hole corresponding thereto during operation, thereby ensuring the sealing property of the housing of the high-capacity battery, and solving the problem that pseudo welding and even a welding failure may occur when the housing and an upper cover plate of the battery cell are directly welded by laser fusion welding in a relevant art.

In the fourth embodiment of the present invention, in order to facilitate the processing and manufacturing, the hollow member is integrally formed on the cover plate body.

In the fourth embodiment of the present invention, in order to avoid a problem of thermal runaway of the battery cell caused by an excessively high local temperature of the electrode terminal, a through slot for mounting a heat transfer tube is formed in the electrode terminal.

In the fourth embodiment of the present invention, in order to improve the operability and adaptability of hermetical fixing between the hollow member on the battery cell and the housing, a portion of the hollow member that is away from the cover plate body may be bent, so as to be welded and sealed with a peripheral region of the first through hole on the housing of the high-capacity battery.

In the fourth embodiment of the present invention, a side wall of the hollow member is provided with a buffer deformation groove. The buffer deformation groove not only provides a certain deformation margin for the hermetical fixing, but also may compensate for a coaxiality deviation between the electrode terminal of the battery cell and the first through hole corresponding thereto, and the deformation margin may be configured to solve a problem of the gap between the housing and the battery cell being too large or too small; and meanwhile, when the high-capacity battery is subjected to an external force or its own vibration, the buffer deformation groove itself has a certain buffer effect, thereby ensuring the reliability of the hermetical fixing.

In the fourth embodiment of the present invention, an outer surface of the electrode terminal is engraved with a knurl. A purpose of providing the knurl is that when insulating glue is poured between the electrode terminal and the hollow member and between the electrode terminal and the hollow member, the insulating glue may be stably attached to and cured therein.

A second aspect of the fourth embodiment of the present invention provides a battery cell, including an outer cylinder, an upper cover assembly, a lower cover assembly and an electrode assembly, wherein the improvement lies in that the upper cover assembly is the upper cover assembly provided in the first aspect of the fourth embodiment of the present invention described above. By using the upper cover assembly, when a high-capacity battery having a sharing chamber is assembled, good sealing property between the battery cell inside the housing and an external environment is ensured by the hollow member of the upper cover assembly in the battery cell.

In the fourth embodiment of the present invention, in order to enable the plurality of battery cells to form a high-capacity battery in which electrolyte is shared, the lower cover assembly is provided with a sealing and unpacking mechanism, and the sealing and unpacking mechanism may be opened under the action of electrolyte or under the action of an external force. By using the lower cover assembly having the sealing and unpacking mechanism, when the high-capacity battery is not assembled, the battery cells themselves have good sealing property, and when it is necessary to form the high-capacity battery, the sealing and unpacking mechanism may be opened, so that electrolyte regions in inner cavities of the plurality of battery cells communicate with each other.

In the fourth embodiment of the present invention, a gas hole in the upper cover assembly is an explosion venting portion, and after the high-capacity battery is formed, the sharing chamber may serve as an explosion venting channel.

In the fourth embodiment of the present invention, the gas hole in the upper cover assembly is a sealing and unpacking mechanism, and the sealing and unpacking mechanism may be opened under the action of electrolyte or under the action of an external force. By using the upper cover assembly having the sealing and unpacking mechanism, when the high-capacity battery is not assembled, the plurality of battery cells themselves have good sealing property, and when it is necessary to form the high-capacity battery, the sealing and unpacking mechanism may be opened, and the sharing chamber may communicate gas regions in the inner cavities of the plurality of battery cells, so that the battery cells are in a gas balance state.

A third aspect of the fourth embodiment of the present invention provides a high-capacity battery, including a housing and a battery cell, wherein a plurality of battery cells are provided, wherein the plurality of battery cells are arranged side by side and are integrally arranged in the housing; a top of the housing is provided with a sharing chamber; and
a portion of a hollow member of the battery cell that is away from a cover plate body is hermetically connected with a region corresponding to a first through hole on the housing; and an electrode terminal of the battery cell extends out of the housing.

In the present invention, the plurality of battery cells are installed side by side in the housing, so as to ensure that an electrode terminal of the battery cell may extend out of respectively corresponding a first through hole on the housing, and the housing and the upper cover assemblies of the battery cell are hermetically connected by the hollow member, thereby ensuring a sealing property of the high-capacity battery; and moreover, the plurality of battery cells are located in a unified electrolyte environment or gas balance environment by means of the sharing chamber in the high-capacity battery, thereby ensuring the uniformity of the plurality of battery cells, and improving the performance of the high-capacity battery and prolonging the cycle life thereof.

In the fourth embodiment of the present invention, on the basis of the high-capacity battery in the third aspect of the fourth embodiment of the present invention, when a gas hole on the battery cell is a through hole, the sharing chamber is integrally formed at the top of the housing, and the sharing chamber communicates with a gas region of the battery cell via the through hole of the battery cell.

In the fourth embodiment of the present invention, on the basis of the high-capacity battery in the third aspect of the fourth embodiment of the present invention, when the gas hole on the battery cell is an explosion venting portion, the sharing chamber is integrally formed at a top of the housing, and the sharing chamber covers the explosion venting portion of the battery cell, so as to ensure that a thermal runaway flue gas in the battery cell is discharged from the gas chamber after breaking through the explosion venting portion.

A fourth aspect of the fourth embodiment of the present invention provides a high-capacity battery, including a housing and a battery cell, wherein a plurality of battery cells are provided, wherein the plurality of battery cells are arranged side by side and are integrally arranged in the housing; a top of the housing is provided with a sharing chamber for communicating electrolyte regions of the plurality of battery cells; and
a portion of a hollow member on the battery cell that is away from a cover plate body is hermetically connected with a region corresponding to a first through hole on the housing; and an electrode terminal of the battery cell extends out of the housing.

A fifth aspect of the fourth embodiment of the present invention provides a high-capacity battery, including a housing and a battery cell, wherein a plurality of battery cells are provided, wherein the plurality of battery cells are arranged side by side and are integrally arranged in the housing; a gas hole in an upper cover assembly of the battery cell is a through hole;
the housing is provided with two sharing chambers, one sharing chamber is integrally formed at the bottom of the housing for communicating electrolyte regions in inner cavities of the battery cells, and the other sharing chamber is integrally formed at the top of the housing for communicating gas regions in the inner cavities of the battery cells; and
a portion of a hollow member on the battery cell that is away from a cover plate body is hermetically connected with a region corresponding to a first through hole on the housing; and an electrode terminal of the battery cell extends out of the housing.

A sixth aspect of the fourth embodiment of the present invention provides a high-capacity battery, including a housing and a battery cell, wherein a plurality of battery cells are provided, wherein the plurality of battery cells are arranged side by side and are integrally arranged in the housing; and a gas hole on the battery cell is an explosion venting portion;
the housing is provided with two sharing chambers, one sharing chamber of the two sharing chambers is integrally formed at the bottom of the housing for communicating electrolyte regions in inner cavities of the plurality of battery cells, and the other sharing chamber of the two sharing chambers is integrally formed at the top of the housing and covers the explosion venting portion of the battery cell, so as to ensure that a thermal runaway flue gas in the battery cell is discharged from the sharing chamber after breaking through the explosion venting portion; and
a portion of a hollow member on the battery cell that is away from a cover plate body is hermetically connected with a region corresponding to a first through hole on the housing; and an electrode terminal of the battery cell extends out of the housing.

In the fourth embodiment of the present invention, in order to reduce the problem of thermal runaway of the battery cells caused by an excessively high local temperature of the electrode terminals, heat transfer tubes are installed on the electrode terminals of the same polarity on the plurality of battery cells in the high-capacity battery in the third to sixth aspects.

### Brief Description of the Drawings

Fig. 1 is a schematic structural diagram of a first form of a high-capacity battery proposed in the related art;
Fig. 2 is a schematic structural diagram of a second form of the high-capacity battery proposed in the related art;
Fig. 3 is a schematic structural diagram of a third form of the high-capacity battery proposed in the related art;
Fig. 4 is a schematic structural diagram of a high-capacity battery provided in Embodiment 1;
Fig. 5 is a cross-sectional view of a hollow member being provided with a buffer deformation groove;
Fig. 6 is a first schematic structural diagram of a first battery cell;
Fig. 7 is a second schematic structural diagram of the first battery cell;
Fig. 8 is a second schematic structural diagram of a second battery cell;
Fig. 9 is a schematic structural diagram of a housing in Embodiment 2;
Fig. 10 is a schematic structural diagram of a U-shaped shell;
Fig. 11 is a schematic structural diagram of a high-capacity battery in Embodiment 2 and Embodiment 3;
Fig. 12 is a schematic structural diagram of a housing in Embodiment 2 and Embodiment 3;
Fig. 13 is a schematic structural diagram of a sealing connector provided in Embodiment 4;
Fig. 14 is a schematic diagram after a sealing connector is connected with a battery cell in Embodiment 4;
Fig. 15 is a schematic diagram after a sealing connector is connected with a high-capacity battery in Embodiment 4, Embodiment 12 and Embodiment 13;
Fig. 16 is a schematic structural diagram of a sealing connector provided in Embodiment 5;
Fig. 17 is a cross-sectional view of a sealing connector additionally provided with a buffer deformation groove;
Fig. 18 is a perspective view of a housing of a high-capacity battery in Embodiment 6 and Embodiment 14;
Fig. 19 is a schematic structural diagram of a first cover plate in Embodiment 6, Embodiment 14 and Embodiment 18;
Fig. 20 is a schematic structural diagram of a U-shaped shell in Embodiment 6 and Embodiment 14;
Fig. 21 is a perspective view of a high-capacity battery in Embodiment 8 and Embodiment 17;
Fig. 22 is a perspective view of a housing of a high-capacity battery in Embodiment 8 and Embodiment 17;
Fig. 23 is a schematic structural diagram of a U-shaped shell in Embodiment 8, Embodiment 17 and Embodiment 18;
Fig. 24 is a schematic structural diagram of a second cover plate in Embodiment 8, Embodiment 17 and Embodiment 18;
Fig. 25 is a schematic structural diagram of a high-capacity battery in Embodiment 9 and Embodiment 18;
Fig. 26 is a schematic structural diagram of a housing of a high-capacity battery in Embodiment 9 and Embodiment 18;
Fig. 27 is a schematic structural diagram of an upper cover assembly in Embodiment 10;
Fig. 28 is an exploded view of the upper cover assembly in Embodiment 10;
Fig. 29 is a cross-sectional view of the upper cover assembly (a fixing portion is a fixing sleeve + an insulating connection column) in Embodiment 10;
Fig. 30 is a cross-sectional view of the upper cover assembly (the fixing portion is a first annular protrusion) in Embodiment 10;
Fig. 31 is a schematic structural diagram of the upper cover assembly (the fixing portion is a columnar protrusion) in Embodiment 10;
Fig. 32 is a cross-sectional view of a hollow member provided with a buffer deformation groove in Embodiment 10;
Fig. 33 is a first schematic structural diagram of a battery cell in Embodiment 11;
Fig. 34 is a second schematic structural diagram of the battery cell in Embodiment 11;
Fig. 35 is a first schematic structural diagram of a high-capacity battery in Embodiment 11;
Fig. 36 is a second schematic structural diagram of the high-capacity battery in Embodiment 11;
Fig. 37 is a third schematic structural diagram of the high-capacity battery in Embodiment 11;
Fig. 38 is a schematic diagram of a housing of the high-capacity battery in Embodiment 11;
Fig. 39 is a schematic structural diagram of an upper cover assembly provided in Embodiment 12; and
Fig. 40 is a schematic structural diagram of a battery cell in which an upper cover assembly is provided with an explosion venting portion in Embodiment 13.

The reference signs are as follows:
1-housing, 11-cylinder body, 12-first cover plate, 13-second cover plate, 14-U-shaped shell, 15-third cover plate, 16-fourth cover plate, 2-battery cell, 21-electrode terminal adapter, 3-first through-hole, 4-sharing chamber, 5-sealing connector, 51-hollow member, 52-first annular plate, 53-second annular plate, 54-third annular plate, 55-buffer deformation groove; 6-upper cover assembly, 43-outer cylinder, 7-lower cover assembly, 8-sealing and unpacking mechanism, 61-cover plate body, 62-electrode terminal, 9-insulating sleeve, 63-fixing portion, 64-insulating plate, 65-stop ring, 66-liquid injection port, 67-gas hole, 68-second annular groove, 69-through slot, 70-second through hole, 71-first annular groove, 72-second annular boss, 73-fixing sleeve, 74-insulating connection column, 75-columnar protrusion, 76-first annular protrusion; 56-electrode terminal, 57-first sealing and unpacking mechanism, 17-first channel, 18-second channel, 58-second sealing and unpacking mechanism, 22-explosion venting portion

### Detailed Description of the Embodiments

A clear and complete description of technical solutions in the embodiments will be given below in combination with the drawings. Apparently, the embodiments described below are merely a part, but not all, of the embodiments. All of other embodiments, obtained by those ordinary skilled in the art based on the following embodiments without any creative effort, fall into the protection scope of the present invention.

Meanwhile, it should be noted that orientation or position relationships indicated by terms "top, bottom, inner and outer" and the like herein are orientation or position relationships shown on the basis of the drawings, and are merely for the convenience of simplifying the description, but do not indicate or imply that referred devices or elements must have specific orientations or must be constructed and operated in specific orientations, and thus cannot be construed as limitations to the technical solutions. In addition, the terms "first, second or third" are used for descriptive purposes only and cannot be construed as indicating or implying relative importance.

In the present invention, unless specifically specified and defined otherwise, the terms "installed, connected and connection" should be understood in a broad sense, for example, the connection may be a fixed connection, a detachable connection or an integral connection, may also be a mechanical connection, an electrical connection or a direct connection, may also be an indirect connection through an intermediate medium, and may also be internal communication between two elements. For those ordinary skilled in the art, the specific meanings of the above terms in the present invention may be understood in specific situations.

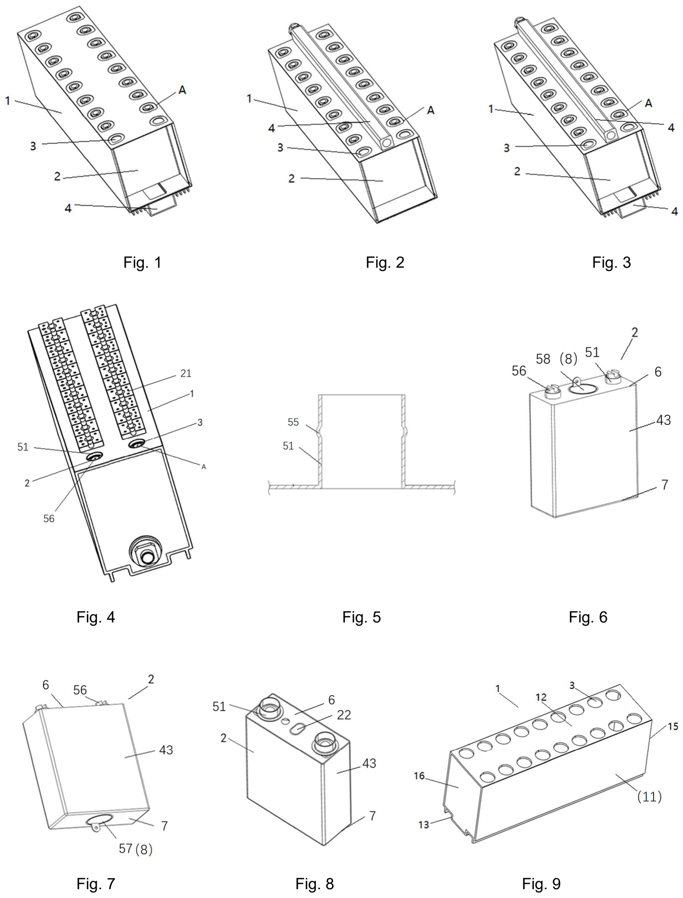

In order to solve the problems in the background art, the related art provides a high-capacity battery. As shown in Fig. 1 to Fig. 3, the high-capacity battery includes a housing 1 and a battery cells 2, wherein a plurality of battery cells 2 are provided; the plurality of battery cells are placed in the housing 1 in parallel, and a first through hole 3 for enabling an electrode terminal of the battery cell to extend out of the housing 1 is formed in a top plate of the housing 1 at a position corresponding to the electrode terminal of the battery cell 2; and the housing 1 is provided with at least one sharing chamber 4 in communication with an inner cavity of the plurality of battery cells 2.

As shown in Fig. 1, one sharing chamber 4 is provided, when the sharing chamber 4 is configured to communicate with electrolyte regions in an inner cavities of the plurality of battery cells 2, electrolyte of the plurality of battery cells may be shared; and as shown in Fig. 2, when the sharing chamber 4 is configured to communicate with gas regions in an inner cavities of the plurality of battery cells 2, gas balance of the plurality of battery cells may be realized.

As shown in Fig. 3, two sharing chambers 4 are provided, one is configured to realize electrolyte sharing of the plurality of battery cells, and the other is configured to realize the gas balance of the plurality of battery cells.

By means of the sharing chamber 4, the plurality of battery cells may be located in at least one of a unified electrolyte environment and a unified gas balance environment, thereby ensuring the uniformity of the plurality of battery cells, and improving the performance of the high-capacity battery and prolonging the cycle life thereof.

In order to avoid the sharing chamber maintaining complete isolation from an external environment, a sealing property of the housing 1 is particularly important.

After the plurality of battery cells 2 are grouped, each first through hole 3 on the housing 1 needs to be hermetically welded with an upper cover assembly of the battery cell 2 corresponding thereto, so as to ensure the sealing property at the position. A currently used manner is that the housing is welded with the upper cover assembly of the battery cell by laser fusion welding in a peripheral region corresponding to each first through hole 3 (the circle at A in Fig. 1 is a welding trajectory).

However, during mass production of high-capacity batteries, due to the presence of processing errors and assembly errors, it is necessary to ensure that the bottoms of the plurality of battery cells are located on a same horizontal plane, the tops (i.e. the upper cover assemblies) of the plurality of battery cells would have a problem of different heights, such that there are gaps between the upper cover assemblies of individual battery cells of the plurality of battery cells 2 and the housings in some high-capacity batteries, resulting in a problem of pseudo welding and even welding failure between the housings and the upper cover assemblies during the laser fusion welding, and thus the yield of the high-capacity batteries is affected.

In order to solve the problem of pseudo welding or welding failure occurring during the laser fusion welding of the housing of the high-capacity battery and an upper cover plate of the battery cell of the high-capacity battery due to the fact that the processing errors and assembly errors result in an excessively large gap between the housing of the high-capacity battery and the upper cover plate of each battery cell of the high-capacity battery, in Embodiment 1 to Embodiment 3, a hollow member is arranged between the upper cover assembly of the battery cell and the first through hole, the hollow member is sleeved on an electrode terminal of the battery cell, a bottom of the hollow member is fixed to the upper cover assembly of the battery cell, it is ensured that a top of the hollow member is in tight fit with an electrode terminal avoidance hole, that is, a first through hole, in a transition or interference fit manner, and finally an outer edge of the top of the hollow member is welded and sealed with an inner edge of the electrode terminal avoidance hole, that is, the first through hole, in a simple and reliable laser fusion welding manner. The manner is easy to operate, and the sealing property at the electrode terminal avoidance hole, that is, the first through hole, after welding is stable and reliable.

### Embodiment 1

The present embodiment provides a high-capacity battery. As shown in Fig. 4, the high-capacity battery includes a housing 1 and a battery cell 2, wherein N battery cells 2 are provided, wherein N is greater than or equal to 2; the N battery cells are arranged side by side and are integrally arranged in the housing; the battery cell 2 has an electrolyte region and a gas region therein; and the electrolyte regions of the N battery cells 2 communicate with each other, so that the N battery cells are located in one electrolyte system;
a hollow member 51 is arranged between an upper cover assembly of the battery cell 2 and a first through hole 3 at a top of the housing 1 that corresponds to the battery cell; and
the hollow member 51 is sleeved on an electrode terminal 56, a bottom of the hollow member 51 is fixedly connected with the upper cover assembly of the battery cell 2, a top of the hollow member 51 is in tight fit with the first through hole 3, and the hollow member 51 is welded and sealed with the first through hole 3 by laser fusion welding; and a fusion welding region between the hollow member 51 and the first through hole 3 is located between an outer edge of the top of the hollow member and an inner edge of the first through hole ( (i.e., the position A in Fig. 4, and the welding trajectory is a thin circle).

The hollow member 51 is a hollow tubular body, and the thickness of which is generally set to be 1 mm to 2 mm, so as to consume less laser power during laser welding.

The bottom of the hollow member 51 may be fixedly connected with the upper cover assembly of the battery cell 2 in the following two embodiments:
In an embodiment: the bottom of the hollow member 51 is provided with an annular plate or is bent, and then is fixed to the upper cover assembly of the battery cell 2 by welding. The embodiment is suitable for reforming a commercially available finished battery to serve as the battery cell in the present invention for use.

In another embodiment: the hollow member 51 is fixed to the upper cover assembly of the battery cell 2 by integral forming. In the embodiment, since the hollow member is integrally formed on the upper cover assembly, subsequent manufacturing procedures of the high-capacity battery may be reduced, and thus the production efficiency is improved.

The tight fit between the top of the hollow member 51 and the first through hole 3 is that an outer diameter of the hollow member is in transition fit or interference fit with the aperture of the first through hole, so as to ensure more reliable subsequent welding between the hollow member and the first through hole.

As shown in Fig. 5, in the present embodiment, a side wall of the hollow member 51 is further provided with a buffer deformation groove 55. The buffer deformation groove 55 not only provides a deformation margin for hermetical fixing, but also may compensate for a coaxiality deviation between the electrode terminal of the battery cell and the first through hole corresponding thereto, and the deformation margin may be configured to solve the problem of inconsistent gaps between the housing and the battery cell; and meanwhile, when the high-capacity battery is subjected to an external force or its own vibration, the buffer deformation groove itself has a certain buffer effect, thereby ensuring the reliability of the hermetical fixing.

It should be noted that, since the housing of the battery cell 2 is made of an aluminum material, the housing of the high-capacity battery and the hollow member of the high-capacity battery are also made of the aluminum material in the present embodiment.

The high-capacity battery in the present embodiment has an electrolyte sharing system, so that the battery cell in the present embodiment may be implemented in the following two embodiments:
As shown in Fig. 6 and Fig. 7, in an embodiment, the battery cell 2 is a self-made aluminum prismatic battery, which includes an outer cylinder 43, an upper cover assembly 6 and a lower cover assembly 7, wherein upper and lower ends of the outer cylinder 43 are both open, the upper cover assembly 6 and the lower cover assembly 7 are fixed to the upper and lower open ends of the outer cylinder 43 by welding, so as to form a sealed inner cavity of the battery cell, the electrode assembly is installed in the inner cavity of the battery cell, and the electrode assembly is connected with an electrode terminal of the upper cover assembly; and an inner cavity of the battery cell 2 is filled with electrolyte.

The lower cover assembly 7 is provided with a first sealing and unpacking mechanism 57, and the first sealing and unpacking mechanism 57 has already been installed when the battery cell leaves the factory; when the battery cell is used alone, the first sealing and unpacking mechanism may hermetically isolate an inner cavity of the battery cell (here the inner cavity is divided into a gas region located above the inner cavity and an electrolyte region located below the inner cavity) from an external environment; and when a plurality of battery cells are required to form a high-capacity battery having an electrolyte sharing system, the first sealing and unpacking mechanism may be opened by an external force or dissolved in the electrolyte, and then a first through hole may be formed on the lower cover assembly.

Since the battery cell is a self-made battery, when the battery cell is manufactured, the hollow member is integrally formed on the upper cover assembly of the battery cell.

As shown in Fig. 8, in another embodiment, the battery cell 2 is reformed from a commercially available aluminum prismatic battery, and the reformation process is specifically as follows: a first through hole is first formed in the lower cover assembly of the purchased commercially available aluminum prismatic battery, a first sealing and unpacking mechanism 57 is arranged at the first through hole, and the process is preferably performed in an environment in which the dew point standard is -25°C to 40 °C, the humidity is less than or equal to 1%, the temperature is 23°C ± 2°C, and the cleanliness grade is 100,000. When the high-capacity battery having the electrolyte sharing system is formed, the first sealing and unpacking mechanism 57 may be opened by an external force or dissolved in electrolyte, so that the first through hole on the lower cover assembly is exposed.

Since the battery cell is reformed from the commercially available aluminum prismatic battery, preferably, before the high-capacity battery is assembled, the hollow member is fixed to the upper cover assembly of the battery cell by welding.

In the above two battery cells, the first sealing and unpacking mechanism may be a structure dissoluble under the action of electrolyte, which is a dissolving mechanism disclosed in the Chinese patent CN218957802U, and the first sealing and unpacking mechanism may be a pull-ring type sealing mechanism that may be opened by using an external force of a tool, which is a sealing mechanism disclosed in the Chinese Patent CN219144319U.

It should also be noted that the electrode terminal 56 is an electrode terminal of the battery cell (including a positive electrode terminal and a negative electrode terminal); if the battery cell is a self-made battery cell, in order to enable the electrode terminal to extend out of the housing, a length of the electrode terminal may be increased during processing; and if the battery cell is reformed from the commercially available prismatic battery, in order to enable the electrode terminal to extend out of the housing, an electrode terminal adapter 21 may be fixedly welded on the own electrode terminal of the commercially available prismatic battery, as shown in Fig. 4.

In the present embodiment, the housing of the high-capacity battery may be formed in the following three embodiments:
the housing in first embodiment: referring to Fig. 9, the housing 1 includes a cylinder body 11, a first cover plate 12 and a second cover plate 13; both a top and a bottom of the cylinder body 11 are open, the first cover plate 12 is hermetically fixed (welded) to the top of the cylinder body 11, and the second cover plate 13 is hermetically fixed (welded) to the bottom of the cylinder body 11;
the first cover plate 12 is provided with 2N first through holes 3; and

in order to increase the usage amount of electrolyte in the electrolyte sharing system, and meanwhile in order to ensure stronger continuity of the electrolyte in the electrolyte sharing system (avoid the occurrence of a liquid shortage phenomenon) to guarantee easier liquid injection, a first channel 17 may be integrally formed on the second cover plate 13, and in use, the first channel 17 ensures the communication with the first through hole of each battery cell.

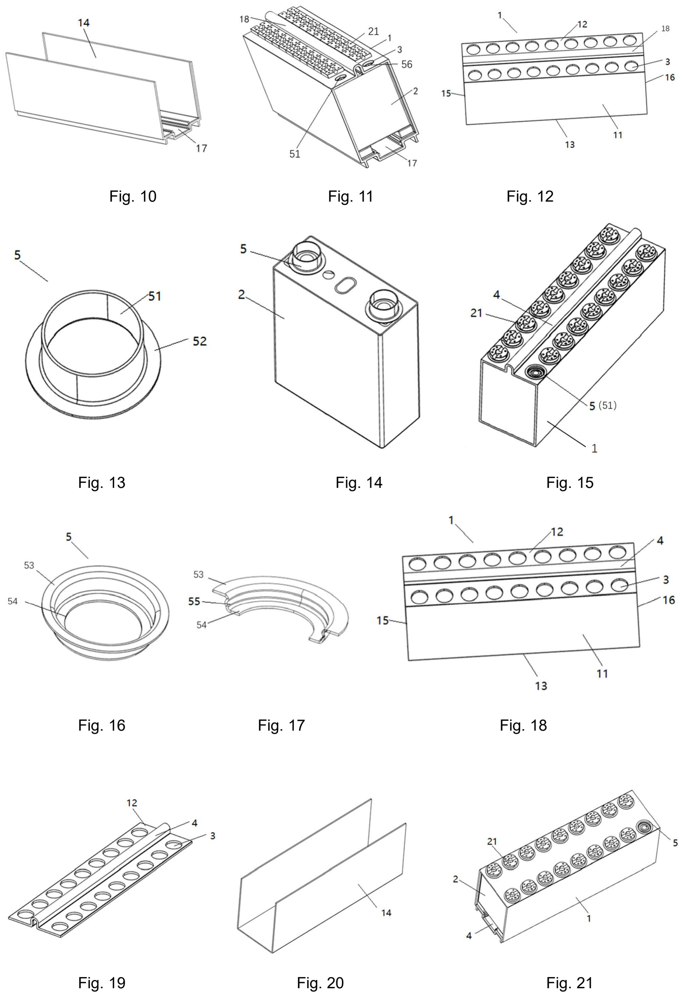

The housing in second embodiment: referring to Fig. 9 and Fig. 10, the housing 1 includes a U-shaped shell 14, a first cover plate 12, a third cover plate 15 and a fourth cover plate 16; the top, the front and the back of the U-shaped shell 14 are all open, the first cover plate 12 is hermetically fixed (welded) to the top of the U-shaped shell 14, and the third cover plate 15 and the fourth cover plate 16 are hermetically fixed (welded) to the front and back of the U-shaped shell 14, respectively;
the first cover plate 12 is provided with 2N first through holes 3; and
in order to increase the usage amount of the electrolyte in the electrolyte sharing system, and meanwhile in order to ensure stronger continuity of the electrolyte in the electrolyte sharing system (avoid the occurrence of the liquid shortage phenomenon) to guarantee easier liquid injection, a first channel 17 may be integrally formed at the bottom of the U-shaped shell 14, and in use, the first channel 17 ensures the communication with the first through hole of each battery cell.

The housing in third embodiment: referring to Fig. 9, the housing 1 includes a cylinder body 11, a third cover plate 15 and a fourth cover plate 16; the front and back of the cylinder body 11 are both open, the third cover plate 15 is hermetically fixed (welded) to the front of the cylinder body 11, and the fourth cover plate 16 is hermetically fixed (welded) to the back of the cylinder body; and
the top of the cylinder body 11 is provided with 2N first through holes 3. In order to increase the usage amount of the electrolyte in the electrolyte sharing system, and meanwhile in order to ensure stronger continuity of the electrolyte in the electrolyte sharing system (avoid the occurrence of the liquid shortage phenomenon) to guarantee easier liquid injection, a first channel 17 may be integrally formed at the bottom of the cylinder body, and in use, the first channel 17 ensures the communication with the first through hole of each battery cell.

In the housing of the above three embodiments, the cylinder body 11 and the U-shaped shell 14 may be spliced by welding and may also be integrally formed by casting or stamping, and in order to ensure the sealing property while facilitating the processing, the embodiment adopts an integrally formed.

### Embodiment 2

Referring to Fig. 11, the structure of the high-capacity battery in the present embodiment is basically the same as that in Embodiment 1, except that:
the top of the housing 1 of the high-capacity battery is further provided with a second channel 18 for communicating the gas regions in the battery cells. During the operation of the high-capacity battery, the second channel may serve as a gas balance channel, so that the battery cells are located in a gas balance system, thereby improving the uniformity of the battery cells in terms of gas pressure, and thus further improving the cycle performance of the high-capacity battery; moreover, since internal pressures of the battery cells are substantially the same, the risk of thermal runaway of a certain battery cell due to an excessively large internal pressure is also greatly reduced, thereby improving the safety of the high-capacity battery; and an exhaust valve is additionally arranged on the first channel for regular exhaust, the cycle life of the high-capacity battery may be further prolonged.

When the second channel is provided, the housing of the above three embodiments in Embodiment 1 need to be changed as follows:
Referring to Fig. 12, in the first embodiment and second embodiment, one second channel 18 needs to be integrally formed on the first cover plate 12 of the housing, and a column of N first through holes 3 in total is respectively formed on the two sides of the position where the second channel 18 is provided; and
in the third embodiment,, one second channel 18 needs to be integrally formed at the top of the cylinder body 11 of the housing, and a column of N first through holes in total is respectively formed on the two sides of the position where the second channel is provided.

Referring to Fig. 6, when the second channel is provided, the two battery cells in Embodiment 1 need to be changed as follows: a second sealing and unpacking mechanism 58 needs to be arranged on the upper cover assembly of the battery cell 2, and the form of the second sealing and unpacking mechanism 58 may refer to the first sealing and unpacking mechanism 57 in Embodiment 1.

### Embodiment 3

Referring to Fig. 11 and Fig. 12, the structure of the high-capacity battery in the present embodiment is basically the same as that in Embodiment 1, except that:
the top of the housing 1 of the high-capacity battery is further provided with a second channel 18 covering an explosion venting portion 22 of the upper cover assembly of each battery cell. When thermal runaway occurs in a curtain battery cell, a thermal runaway flue gas breaks through the explosion venting portion 22 to be discharged from the second channel to an external thermal runaway flue gas processing device for timely processing, thereby reducing the probability of occurrence of more serious accidents.

When the second channel is provided, the housing of the above three embodiments in Embodiment 1 need to be changed as follows:
in the first embodiment and second embodiment, one second channel 18 needs to be integrally formed on the first cover plate 12 of the housing, and a column of N first through holes 3 in total is respectively formed on the two sides of the position where the second channel 18 is provided; and
in the third embodiment, one second channel 18 needs to be integrally formed at the top of the cylinder body of the housing, and a column of N first through holes 3 in total is respectively formed on the two sides of the position where the second channel 18 is provided.

When the second channel is provided, the two battery cells in Embodiment 1 need to be changed as follows: an explosion venting portion needs to be arranged on the upper cover assembly of the battery cell, and of course, if the battery cell is reformed from a commercially available aluminum prismatic battery, the explosion venting portion carried on the commercially available aluminum prismatic battery itself may be used.

In Embodiment 4 to Embodiment 9, a sealing connector is used to solve the problem of pseudo welding or welding failure occurring during laser fusion welding of the housing of the high-capacity battery and an upper cover plate of each battery cell due to the fact that processing errors and assembly errors result in an excessively large gap between the housing of the high-capacity battery and the upper cover plate of each battery cell. The sealing connector includes a hollow member; a bottom of the hollow member is hermetically connected with a first region of the battery cell, and a top of the hollow member is hermetically connected with a second region of the housing; the first region is a region located at the periphery of any electrode terminal in the upper cover plate of any battery cell; and the second region is a region corresponding to any first through hole on the housing.

The region corresponding to the first through hole is a peripheral region on an outer surface of the housing that corresponds to the first through hole; or the region corresponding to the first through hole is a hole wall of the first through hole.

The peripheral region of the electrode terminal is a peripheral region of an insulating sealing gasket on the electrode terminal. The insulating sealing gasket is a part on the battery cell that is used for insulating the electrode terminal from the upper cover plate.

The hollow member is a thin-walled tubular structure, which may be hermetically connected with the upper cover plate of the battery cell and the housing of the high-capacity battery respectively by bonding, riveting or welding. A horizontal cross section of the hollow member may take the shape of a rectangular ring or a circular ring, and in order to better fit the shape of the first through hole and the shape of the electrode terminal, the cross section of the hollow member takes the shape of a circular ring.

With respect to the welding manner, the bonding reliability is poor, and the riveting manner is inconvenient to assemble, therefore the hollow member is hermetically connected with the housing and the upper cover plate of the battery cell by welding.

It should be noted that in order to ensure the welding operability among the housing of the high-capacity battery, the upper cover assembly of the battery cell and the hollow member, and the reliability after welding, since the housing of the battery cell is made of an aluminum material, the hollow member and the housing of the high-capacity battery are also made of the aluminum material.

The sealing connector and the high-capacity battery using the sealing connector are described below in conjunction with embodiments.

### Embodiment 4

As shown in Fig. 13, in the present embodiment, the sealing connector 5 includes a hollow member 51 and a first annular plate 52 arranged at a bottom of the hollow member 51; the first annular plate 52 may be fixed to an outer side of the bottom of the hollow member 51 by welding, the first annular plate 52 may also be integrally formed at the bottom of the hollow member 51 by bending, and in order to facilitate the processing, in the present embodiment, the first annular plate 52 is integrally formed on the hollow member 51 by bending.

With reference to Fig. 13 to Fig. 15, when the sealing connector 5 in the embodiment is in use, the sealing connector 5 is first sleeved outside the electrode terminal of the battery cell 2, and then the sealing connector 5 is welded to an upper cover plate of the battery cell 2 by using the first annular plate 52. In order to ensure the reliability and the sealing property of the welding between the hollow member 51 and the upper cover plate of the battery cell 2, a laser fusion welding manner is selected in the present embodiment, the battery cell 2 to be welded is first placed in the housing 1, then the top of the sealing connector 5 on the battery cell 2 is bent, so that the bent portion is in contact with the upper surface of the housing 1, and finally the bent portion is welded with the housing. In order to ensure the reliability and the sealing property of the welding between the sealing connector 5 and the housing 1, the laser fusion welding manner is also selected in the present embodiment.

In some other embodiments, the bottom of the hollow member 51 is not provided with the first annular plate 52, when the hollow member 51 is welded to the upper cover plate, the laser fusion welding manner cannot be used, which may make the reliability and the sealing property of the welded portion be relatively weak.

In some other embodiments, the bottom of the hollow member 51 is not bent, when the hollow member 51 is welded to the housing 1, the laser fusion welding manner cannot be used, which may make the reliability and the sealing property of the welded portion be relatively weak.

In some other embodiments, in order to enable the electrode terminal of the battery cell to extend out, an electrode terminal adapter 21 may be additionally arranged on an existing electrode terminal of the battery cell by screw connection or welding, so as to ensure that the electrode terminal may extend out of the housing. A horizontal cross section of the electrode terminal adapter 21 may be cylindrical or square.

### Embodiment 5

As shown in Fig. 15 and Fig. 16, in the present embodiment, the sealing connector 5 includes a hollow member 51, a second annular plate 53 is arranged on the outer side of the top of the hollow member, and a third annular plate 54 is arranged on the inner side of the bottom of the hollow member; and an inner diameter of the third annular plate is greater than an outer diameter of an insulating sealing gasket arranged at an electrode terminal of a battery cell, and the outer diameter of a side wall of the hollow member 51 located between the second annular plate 53 and the third annular plate 54 is less than the aperture of a first through hole 3 on a housing 1. The second annular plate 53 and the third annular plate 54 may be respectively fixed to the top and the bottom of the hollow member 51 by welding (the top may be a top end of the hollow member or a portion close to the top end, and the top end is preferred; and the bottom is a bottom end of the hollow member), the second annular plate 53 and the third annular plate 54 may also be integrally formed on the top and the bottom of the hollow member 51 by bending, and in order to facilitate the processing, in the present embodiment, the second annular plate and the third annular plate are integrally formed on the hollow member by bending.

Referring to Fig. 15, when the sealing connector in the present embodiment is in use, the battery cell may be first placed in the housing 1, after it is ensured that the electrode terminal of the battery cell 2 extends out of the first through hole 3, the sealing connector 5 is then placed from the first through hole 3, after it is ensured that the third annular plate 54 is in contact with an upper cover plate of the battery cell and the second annular plate 53 is in contact with an outer surface of the housing, the third annular plate 54 and the upper cover plate of the battery cell, and the second annular plate 53 and the outer surface of the housing 1 are respectively welded. In order to ensure the reliability and the sealing property of the welding between the third annular plate 54 and the upper cover plate of the battery cell and between the second annular plate 53 and the outer surface of the housing 1, the laser fusion welding manner is selected in the present embodiment.

Compared with the structural form in Embodiment 7, the structural form of the hollow member does not require an additional bending operation, thereby improving the working efficiency.

In the present embodiment, as shown in Fig. 17, in the present embodiment, a side wall of the hollow member 51 is further provided with a buffer deformation groove 55. The buffer deformation groove 55 not only provides a certain deformation margin for hermetical fixing, but also may compensate for a coaxiality deviation between the electrode terminal of the battery cell and the first through hole corresponding thereto, and the deformation margin may be used for solving the problem that an excessively large gap between the housing and the battery cell is not conducive to welding; and meanwhile, when the high-capacity battery is subjected to an external force or its own vibration, the buffer deformation groove itself has a certain buffer effect, thereby ensuring the reliability of the hermetical fixing.

Of course, the structure of the buffer deformation groove 55 may also be applicable to the sealing connector in Embodiment 7.

### Embodiment 6

The present embodiment provides a high-capacity battery. As shown in Fig. 15, the high-capacity battery includes a housing 1, a battery cell and a sealing connector 5, wherein N battery cells 2 are provided and 2N sealing connectors 5 are provided, wherein N is greater than or equal to 2; the N battery cells 2 are arranged in parallel and are integrally arranged in the housing 1; and the top of the housing 1 is provided with a sharing chamber 4 in communication with a gas region of each battery cell 2 of the N battery cells 2.

A bottom of the sealing connector 5 is hermetically connected with a first region of the battery cell 2, and a top of the sealing connector 5 is hermetically connected with a second region of the housing 1; an electrode terminal of the battery cell 2 extends out of the sealing connector 5, and the electrode terminal is kept insulated from the sealing connector 5; and the insulation manner may be pouring insulating glue or providing an insulating rubber sleeve.

The sealing connector 5 uses the structural form in Embodiment 8, and of course, the structure in Embodiment 7 is also applicable.

The housing may use the following three embodiments:
1. Referring to Fig. 18 and Fig. 19, the housing 1 includes a cylinder body 11, a first cover plate 12 and a second cover plate 13; both the top and the bottom of the cylinder body 11 are open, the first cover plate 12 is hermetically fixed (welded) to the top of the cylinder body 11, and the second cover plate 13 is hermetically fixed (welded) to the bottom of the cylinder body 11; and
   one sharing chamber 4 and 2N first through holes 3 are integrally formed on the first cover plate 12, and the 2N first through holes 3 are located on the two sides of the sharing chamber 4.
2. Referring to Fig. 18 and Fig. 20, the housing 1 includes a U-shaped shell 14, a first cover plate 12, a third cover plate 15 and a fourth cover plate 16; and the top, the front and the back of the U-shaped shell 14 are all open, the first cover plate 12 is hermetically fixed (welded) to the top of the U-shaped shell 14, and the third cover plate 15 and the fourth cover plate 16 are hermetically fixed (welded) to the front and back of the U-shaped shell 14, respectively; and
   one sharing chamber 4 and 2N first through holes 3 are integrally formed on the first cover plate 12, and the 2N first through holes 3 are located on the two sides of the sharing chamber 4.
3. Referring to Fig. 18, the housing 1 includes a cylinder body 11, a third cover plate 15 and a fourth cover plate 16; both the front and back of the cylinder body 11 are open, the third cover plate 15 is hermetically fixed (welded) to the front of the cylinder body 11, and the fourth cover plate 16 is hermetically fixed (welded) to the back of the cylinder body; and
one sharing chamber 4 and 2N first through holes 3 are integrally formed at the top of the cylinder body 11, and the 2N first through holes 3 are located on the two sides of the sharing chamber 4.

In the housing of the above three embodiments, the cylinder body 11 and the U-shaped shell 14 may be spliced by welding, and may also be integrally formed by casting or stamping, and in order to ensure the sealing property while facilitating the processing, the embodiment adopts an integrally formed.

### Embodiment 7

Referring to Fig. 14, the structure of the high-capacity battery in the present embodiment is basically the same as that in Embodiment 9, except that: a gas hole of the battery cell is an explosion venting portion, at this time, the sharing chamber covers the explosion venting portion, and when thermal runaway occurs in the battery cell, a thermal runaway flue gas may be discharged from the sharing chamber after breaking through the explosion venting portion.

### Embodiment 8

As shown in Fig. 21, the structure of the high-capacity battery in the present embodiment is basically the same as that in Embodiment 9, and there is one sharing chamber 4, except that the sharing chamber 4 is arranged at the bottom of the housing for communicating electrolyte regions of inner cavities of the battery cells. Since the battery cells share electrolyte, a plurality of battery cells need to be arranged in parallel in the present embodiment.

Sealing mechanisms on lower cover assemblies of the battery cells are opened under the action of electrolyte or under the action of an external force, then the electrolyte regions of the battery cells communicate with the sharing chamber, so that the battery cells are located in a common electrolyte system, thereby improving the performance of the high-capacity battery and prolonging the cycle life thereof.

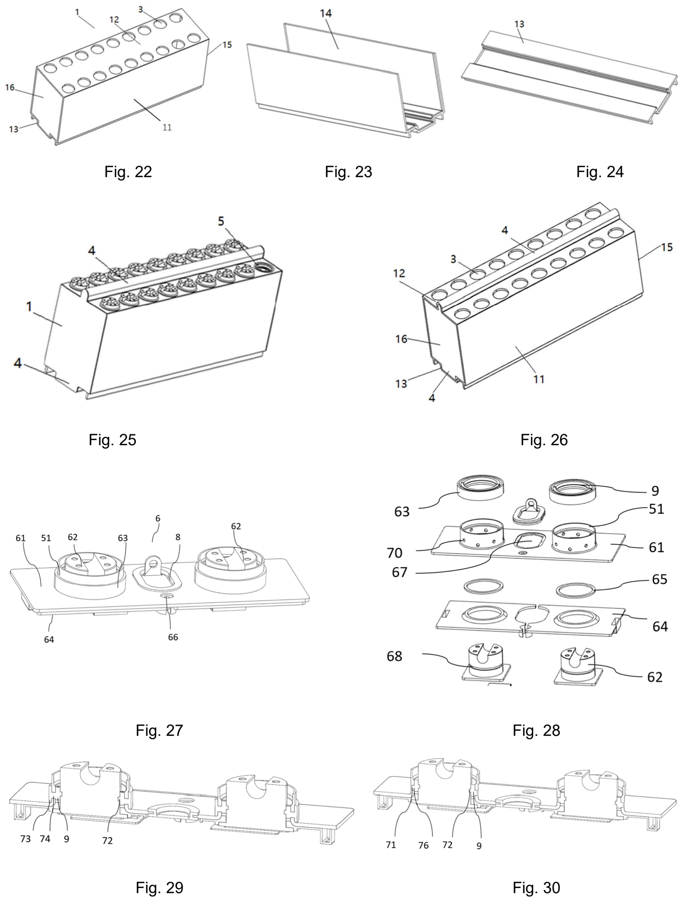

The housing of the high-capacity battery may be formed in the following three embodiments:
1. Referring to Fig. 22 and Fig. 24, the housing 1 includes a cylinder body 11, a first cover plate 12 and a second cover plate 13; both the top and the bottom of the cylinder body 11 are open, the first cover plate 12 is hermetically fixed (welded) to the top of the cylinder body 11, and the second cover plate 13 is hermetically fixed (welded) to the bottom of the cylinder body 11; and
   the first cover plate 12 is provided with 2N first through holes 3, and one sharing chamber is integrally formed on the second cover plate 13.
2. Referring to Fig. 22 and Fig. 23, the housing 1 includes a U-shaped shell 14, a first cover plate 12, a third cover plate 15 and a fourth cover plate 16; and the top, the front and the back of the U-shaped shell 14 are all open, the first cover plate 12 is hermetically fixed (welded) to the top of the U-shaped shell 14, and the third cover plate 15 and the fourth cover plate 16 are hermetically fixed (welded) to the front and back of the U-shaped shell 14, respectively; and
   the first cover plate 12 is provided with 2N first through holes 3, and one sharing chamber is integrally formed at the bottom of the U-shaped shell 14.
3. Referring to Fig. 20, the housing 1 includes a cylinder body 11, a third cover plate 15 and a fourth cover plate 16; both the front and back of the cylinder body 11 are open, the third cover plate 15 is hermetically fixed (welded) to the front of the cylinder body 11, and the fourth cover plate 16 is hermetically fixed (welded) to the back of the cylinder body; and
the top of the cylinder body 11 is provided with 2N first through holes 3, and one sharing chamber is integrally formed at the bottom of the cylinder body 11.

In the housing of the above three embodiments, the cylinder body 11 and the U-shaped shell 14 may be spliced by welding, and may also be integrally formed by casting or stamping, and in order to ensure the sealing property while facilitating the processing, the embodiment adopts an integrally formed.

### Embodiment 9

As shown in Fig. 25, in the present embodiment, on the basis of Embodiment 8 (the electrolyte may be shared), one sharing chamber 4 is additionally arranged at the top of the housing, that is to say, the high-capacity battery in the present embodiment has two sharing chambers 4.

When the sharing chamber 4 additionally arranged at the top of the housing communicates with the gas region in the inner cavity of each battery cell, the high-capacity battery has an electrolyte sharing function and a gas balance function at the same time, thereby greatly improving the consistency of gases in the battery cells.

When the sharing chamber 4 additionally arranged at the top of the housing covers the explosion venting portion of each battery cell 2, the high-capacity battery has a single battery explosion venting function while having the electrolyte sharing function, thereby improving the safety to a certain extent while ensuring the consistency of electrolyte in the battery cells.

In the present embodiment, the housing of the high-capacity battery may be formed in the following three embodiments:
1. Referring to Fig. 26, the housing 1 includes a cylinder body 11, a first cover plate 12 and a second cover plate 13; both the top and the bottom of the cylinder body 11 are open, the first cover plate 12 is hermetically fixed (welded) to the top of the cylinder body 11, and the second cover plate 13 is hermetically fixed (welded) to the bottom of the cylinder body 11; and
   referring to Fig. 19, the first cover plate 12 is provided with 2N first through holes 3 and is integrally formed with one sharing chamber, and referring to Fig. 195, one sharing chamber is also integrally formed on the second cover plate 13.
2. Referring to Fig. 26, the housing 1 includes a U-shaped shell 14, a first cover plate 12, a third cover plate 15 and a fourth cover plate 16; and the top, the front and the back of the U-shaped shell 14 are all open, the first cover plate 12 is hermetically fixed (welded) to the top of the U-shaped shell 14, and the third cover plate 15 and the fourth cover plate 16 are hermetically fixed (welded) to the front and back of the U-shaped shell 14, respectively; and
   referring to Fig. 19, the first cover plate 12 is provided with 2N first through holes 3 and is integrally formed with one sharing chamber, and referring to Fig. 194, one sharing chamber is also integrally formed at the bottom of the U-shaped shell 14.
3. Referring to Fig. 26, the housing 1 includes a cylinder body 11, a third cover plate 15 and a fourth cover plate 16; both the front and back of the cylinder body 11 are open, the third cover plate 14 is hermetically fixed (welded) to the front of the cylinder body 11, and the fourth cover plate 16 is hermetically fixed (welded) to the back of the cylinder body; and
the top of the cylinder body 11 is provided with 2N first through holes 3 and is integrally formed with one sharing chamber, and one sharing chamber is also integrally formed at the bottom of the cylinder body 11.

In the housing of the above three embodiments, the cylinder body 11 and the U-shaped shell 14 may be spliced by welding, and may also be integrally formed by casting or stamping, and in order to ensure the sealing property while facilitating the processing, the embodiment adopts an integrally formed.

Embodiment 10 and embodiment 11 provide an upper cover assembly. The difference between the upper cover assembly of the present invention and an upper cover assembly of the battery cell in the related art lies in that: two hollow members are added on the upper cover assembly of the battery cell in the related art, so as to solve a problem of pseudo welding or welding failure occurring during laser fusion welding of the housings of the high-capacity batteries and the upper cover plates of battery cells due to the fact that processing errors and assembly errors result in excessively large gaps between the housings in some high-capacity batteries and the upper cover plates of the battery cells during mass production of the high-capacity batteries. While the above problem is solved, it is necessary to ensure the insulation between the hollow member and the electrode terminal, therefore an insulating sleeve is arranged between the hollow member and the electrode terminal, and the insulating sleeve is reliably installed on the hollow member, so that the high-capacity battery is used safely and reliably.

### Embodiment 10

As shown in Fig. 27 to Fig. 32, an upper cover assembly 6 in the present embodiment includes a cover plate body 61, an electrode terminal 62 and a hollow member 51, wherein two electrode terminals 62 and two hollow members 51 are provided; and the cover plate body 61 is a rectangular flat-plate structure, which is provided with two electrode terminal holes. The two ends of the hollow member 51 are both open, and one end of the hollow member 51 is hermetically connected with the electrode terminal hole of the cover plate body 61, so that one open end of the hollow member 51 communicates with the electrode terminal hole of the cover plate body 61; and the other end of the hollow member 51 is hermetically connected with a region on the housing 1 of the high-capacity battery that corresponds to the first through hole corresponding thereto, wherein the region corresponding to the first through hole is a peripheral region on an outer surface of the high-capacity battery that corresponds to any first through hole; or the region corresponding to the first through hole is a hole wall of the first through hole.

In the present embodiment, the hollow member 51 is of a thin-walled tubular structure, the cross section of the hollow member 51 may be circular or rectangular, and in order to better adapt to the shape of the first through hole and the electrode terminal 62, the cross section of the hollow member 51 is circular. The hollow member 51 may be connected with the cover plate body 61 by bonding, riveting or welding. However, the above manners have the defects of relatively cumbersome processing and relatively low efficiency. Therefore, in the present embodiment, the hollow member 51 is integrally formed on the cover plate body 61, and the integrally formed structure not only facilitates the processing, but also ensures better sealing property of the entire upper cover assembly 6. Meanwhile, the hollow member 51 may also be hermetically connected with the housing of the high-capacity battery by bonding, riveting or welding. However, with respect to the welding manner, the bonding reliability is poor, and the riveting manner is inconvenient to assemble, therefore the hollow member 51 is hermetically connected with the housing of the high-capacity battery by welding in general.

When the hollow member 51 is connected with the housing of the high-capacity battery, a portion of the hollow member 51 that is away from the cover plate body 61 may be bent outwards to form a bent region, the hollow member 51 is hermetically connected with the peripheral region corresponding to the first through hole 3 on the housing via the bent region, and the bent region may improve the operability and adaptability of hermetical fixing between the hollow member 51 on each battery cell 2 and the housing. In the present embodiment, the portion of the hollow member 51 that is away from the cover plate body 61 is not bent, the end of the hollow member 51 that is away from the cover plate body 61 may also be additionally provided with an annular plate, during installation, the hollow member 51 is inserted into the first through hole, the annular plate is welded with the top of the hollow member 51, and meanwhile, the annular plate is hermetically connected with the peripheral region corresponding to the first through hole 3 on the housing. In this connection manner, the operation is relatively complex, therefore in the above manner, in the present embodiment, the hollow member 51 is bent to form the bent region, and the bent region is hermetically connected with the housing.

In the present embodiment, the two electrode terminals 62 are correspondingly inserted into the two hollow members 51, one end of the electrode terminal extends to the outer side of the open end of the hollow member 51, so as to enable the electrode terminal 62 to extend out of the housing of the high-capacity battery during the assembly of the high-capacity battery. The other ends of the two electrode terminals 62 (a positive electrode terminal and a negative electrode terminal) are respectively connected with an electrode assembly of the battery cell by a positive electrode connection sheet and a negative electrode connection sheet.

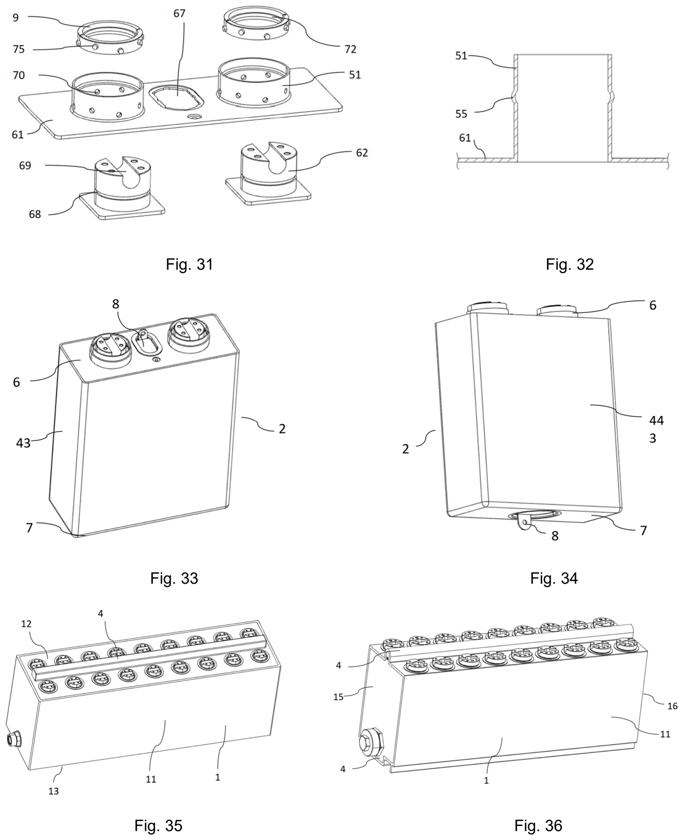

In order to ensure the safe use of the battery cell 2, corresponding insulation processing needs to be performed on the upper cover assembly 6. First, the side of the cover plate body 61 facing the electrode assembly is provided with an insulating plate 64, the insulating plate 64 may not only realize the insulation between the cover plate body 61 and the electrode assembly, but may also realize the insulation between the electrode terminal 62 and the cover plate body 61, the insulating plate 64 has the same as the structure and function as the insulating plate 64 of the upper cover assembly 6 of the existing battery cell 2, and thus details are not described herein again. In the present embodiment, it is necessary to focus on the insulation between the electrode terminal 62 and the hollow member 51. In the present embodiment, an insulating sleeve 9 is arranged between the electrode terminal 62 and the hollow member 51, so as to ensure the reliable insulation between the electrode terminal 62 and the hollow member 51. meanwhile, the insulating sleeve 9 is provided with a fixing portion 63, so as to reliably connect the insulating sleeve 9 with the hollow member 51 and the electrode terminal 62 to prevent the insulating sleeve 9 from falling off to generate the problem of insulation failure. The fixing portion 63 may be specifically implemented by using a variety of structures as follows:
first, as shown in Figs. 29-31, an outer wall of the electrode terminal 62 is provided with a second annular groove 68, the fixing portion 63 is a second annular boss 72 arranged on an inner wall of the insulating sleeve 9, and the second annular boss 72 of the insulating sleeve 9 is embedded into the second annular groove 68 of the electrode terminal 62;
second, as shown in Fig. 30, a side wall of the hollow member 51 is provided with a first annular groove 71 protruding outwards, and the fixing portion 63 is a first annular protrusion 76 arranged on an outer wall of the insulating sleeve 9 and embedded into the first annular groove 71;
third, as shown in Fig. 31, the side wall of the hollow member 51 is provided with at least one second through hole 70, and the fixing portion 63 is a columnar protrusion 75 arranged on the outer wall of the insulating sleeve 9 and embedded into the second through hole 70;
fourth, as shown in Fig. 28 and Fig. 29, the side wall of the hollow member 51 is provided with at least one second through hole 70, and the fixing portion 63 is composed of a fixing sleeve 73 sleeved on the outer side of the hollow member 51 and an insulating connection column 74 embedded into the second through hole 70, and the two ends of the insulating connection column 74 are respectively connected with the fixing sleeve 73 and the insulating sleeve 9;
fifth, as shown in Fig. 28 and Fig. 29, the fixing portion 63 includes a second annular boss 72 on the inner wall of the insulating sleeve 9, a fixing sleeve 73 sleeved on the outer side of the hollow member 51, and an insulating connecting post 74 embedded into the second through hole 70, the outer wall of the electrode terminal 62 is provided with a second annular groove 68, and the second annular boss 72 of the insulating sleeve 9 is embedded into the second annular groove 68 of the electrode terminal 62; and the side wall of the hollow member 51 is provided with at least one second through hole 70, and the two ends of the insulating connection column 74 pass through the second through hole 70 to be respectively connected with the fixing sleeve 73 and the insulating sleeve 9; and
sixth, as shown in Fig. 30, the fixing portion 63 includes a second annular boss 72 on the inner wall of the insulating sleeve 9, and a first annular protrusion 76 on the outer wall of the insulating sleeve 9, the outer wall of the electrode terminal 62 is provided with a second annular groove 68, and the second annular boss 72 of the insulating sleeve 9 is embedded into the second annular groove 68 of the electrode terminal 62; and meanwhile, the side wall of the hollow member 51 is provided with a first annular groove 71 protruding outwards, and the first annular protrusion 76 is embedded into the first annular groove 71.

In the fixing portion of the above six structures, the fixing portion 63 in the first structural form, the second structural form and the third structural form is simple in structure and is convenient to process and manufacture, but the stability of the insulating sleeve 9 is relatively weak after the fixing portion is connected; the fixing portion 63 in the fourth structural form may reliably install the insulating sleeve 9 on the hollow member 51, and meanwhile may also protect the hollow member 51, thereby avoiding an impact on the subsequent connection with the housing 1 of the high-capacity battery due to a damage or deformation to the hollow member 51 during the process of carrying the battery cell 2; the fixing portion 63 in the fifth structural form and the sixth structural form is a preferred structure, the fixing portion 63 in the structural form may not only protect the hollow member 51, so as to avoid the damage or deformation to the hollow member 51 during the process of carrying the battery cell 2, but may also enable a reliable connection of the insulating sleeve 9 with the electrode terminal 62 and the hollow member 51, thereby further avoiding the problem of insulation failure caused by the fall-off of the insulating sleeve 9.

In the present embodiment, the insulating sleeve 9 and the fixing portion 63 are integrally formed by an injection molding process, the insulating sleeve 9 formed by the injection molding process may be completely filled in a gap between the hollow member 51 and the electrode terminal 62, so that the sealing property at the electrode terminal hole on the cover plate body 61 is better. During the injection molding, the material of the insulating sleeve 9 and the fixing portion 63 is similar to the material of the insulating plate 64, PPS (polyphenylene sulfide) or the like may be used, and certainly, a material similar to PPS may also be used. In addition, during the injection molding of the insulating sleeve 9 and the fixing portion 63, a stop ring 65 may also be placed at the top of the insulating plate 64, and the stop ring 65 blocks a raw material in a molten state during the injection molding of the insulating sleeve 9 and the fixing portion 63, so as to prevent the raw material in the molten state from leaking, thus ensuring the injection molding of the insulating sleeve 9 and the fixing portion 63.

In other embodiments of the present invention, the insulating sleeve 9 and the fixing portion 63 are embedded between the hollow member 51 and the electrode terminal 62 by extrusion or in other manners after being manufactured. However, this manner damages the insulating sleeve 9 and the fixing portion 63 during an installation process, so that the sealing property of the insulating sleeve 2 is worse than that in the injection molding manner, therefore In the present embodiment, the insulating sleeve 9 and the fixing portion 63 are integrally formed by using the injection molding process.

In the present embodiment, the upper cover assembly 6 in the present embodiment may also be optimized as follows:
1. As shown in Fig. 31, in order to avoid the problem of thermal runaway of each battery cell 2 caused by an excessively high local temperature of the electrode terminal 62, a through slot 69 for mounting a heat transfer tube is formed in the portion of the electrode terminal 62 that extends out of the housing 1. The cross section of the through slot 69 may be designed to be U-shaped or C-shaped. Since the C-shaped through slot 69 has a natural tension at the opening, the installation of the heat transfer tube is facilitated, and meanwhile it is conducive to clamping the heat transfer tube in the through slot 69 more tightly, so that the heat conduction effect of a heat transfer connection member and the heat transfer tube is better. Therefore, in the present embodiment, a C shape is selected as the cross section of the through slot 69.
2. As shown in Fig. 32, in the present embodiment, the side wall of the hollow member 51 is further provided with a buffer deformation groove 55. The buffer deformation groove 55 is located above the first annular groove 71, the buffer deformation groove 55 not only provides a certain deformation margin for hermetical fixing, but also may compensate for a coaxiality deviation between the electrode terminal 62 of the battery cell 2 and the first through hole 3 corresponding thereto, and the deformation margin may be used for solving the problem that an excessively large gap between the housing 1 and the battery cell 2 is not conducive to welding; and meanwhile, when the high-capacity battery is subjected to an external force or its own vibration, the buffer deformation groove 55 itself has a certain buffer effect, thereby ensuring the reliability of the hermetical fixing.

As shown in Fig. 27 and Fig. 28, in the present embodiment, the cover plate body 61 may be further provided with a liquid injection port 66, the liquid injection port 66 is used for performing liquid injection on the battery cell 2, and the liquid injection port 66 is sealed after the liquid injection is completed. Meanwhile, the cover plate body 61 may be further provided with a gas hole 67, the gas hole 67 is located between the two hollow members 51, the gas hole 67 may be provided with a sealing and unpacking mechanism 8, the sealing and unpacking mechanism 8 may be opened under the action of electrolyte or under the action of an external force, and the gas region in the inner cavity of the battery cell 2 communicates with the sharing chamber 4, so that each battery cell 2 is in a gas balance state. The sealing and unpacking mechanism 8 is generally covered on the gas hole 67 by welding, bonding or injection molding, and injection molding by using non-metallic materials such as polypropylene is preferred. During an opening process of the sealing and unpacking mechanism 8 made of the material, even if flying debris flies out, the flying debris is adhered between the positive electrode and the negative electrode, and thus generating no short circuit of the battery. Meanwhile, the one-time injection molding manner is simple in process, convenient to process and relatively high in yield.

In the present embodiment, an explosion venting portion (for example, an explosion venting membrane) may also be installed on the gas hole 67, so as to ensure that the thermal runaway flue gas in the battery cell 2 is discharged after breaking through the explosion venting portion. If the upper cover assembly 6 is not provided with the explosion venting portion, the explosion venting portion of the battery cell 2 may be arranged on the lower cover assembly 7.

### Embodiment 11

As shown in Fig. 33 and 34, the present embodiment provides a battery cell. The battery cell 2 includes an outer cylinder 43, an upper cover assembly 6, a lower cover assembly 7, and an electrode assembly; the upper and lower ends of the outer cylinder 43 are both open, the upper cover assembly 6 and the lower cover assembly 7 are hermetically fixed to the upper and lower open ends of the outer cylinder 43, so as to form a sealed battery shell, the electrode assembly is installed in the battery shell, and the electrode assembly is connected with an electrode terminals 62 in the upper cover assembly 6; and the inner cavity of the battery cell 2 is filled with electrolyte. In the present embodiment, the upper cover assembly 6 uses the upper cover assembly 6 in Embodiment 10; by using the upper cover assembly 6, when a high-capacity battery having a sharing chamber is assembled, good sealing property between the battery cell 2 in a housing 1 and an external environment is ensured by a hollow member of the upper cover assembly 6 in the battery cell 2.

Meanwhile, in the present embodiment, at least one of the upper cover assembly 6 and the lower cover assembly 7 is provided with a sealing and unpacking mechanism 8, the sealing and unpacking mechanism 8 is opened under the action of electrolyte or under the action of an external force to form an opening on the battery shell, and the form of the sealing and unpacking mechanism 8 may refer to the patent CN218525645U.

As shown in Fig. 35 to Fig. 36, the N battery cells 2 are arranged side by side, and are integrally arranged in the housing 1 to form a high-capacity battery. The top of the housing 1 is provided with 2N first through holes 3, the portion of the hollow member 51 of the upper cover assembly 6 in the battery cell 2 that is away from a cover plate body 61 may be bent outwards and is hermetically welded with a peripheral region corresponding to a first through hole 3 on the housing 1; the electrode terminal 62 of the battery cell 2 extends out of the housing 1, and the electrode terminal 62 is kept insulated from the hollow member 51; at least one of the top and the bottom of the housing 1 is provided with a sharing chamber 4, and the 2N first through holes 3 are located on the two sides of the sharing chamber 4 at the top of the housing 1; and by means of the sharing chamber 4 in the high-capacity battery, the battery cells 2 are located in a unified electrolyte environment or a unified gas balance environment, thereby ensuring the uniformity of the battery cells 2, and improving the performance of the high-capacity battery and prolonging the cycle life thereof.

When the sealing and unpacking mechanism 8 is installed on the gas hole 67 of the upper cover assembly 6, the sealing and unpacking mechanism 8 may be opened under the action of electrolyte or under the action of an external force, so that a gas region in the inner cavity of the battery cell 2 communicates with the sharing chamber 4.

When an explosion venting portion is installed on the gas hole 67 of the upper cover assembly 6, the sharing chamber 4 covers the explosion venting portion of each battery cell 2, so as to ensure that a thermal runaway flue gas in the battery cell 2 is discharged from the additionally provided sharing chamber 4 after breaking through the explosion venting portion.

When the sealing and unpacking mechanism 8 is arranged on the lower cover assembly 7, the sealing and unpacking mechanism 8 may be opened under the action of electrolyte or under the action of an external force, so that an electrolyte region in the inner cavity of the battery cell 2 communicates with the sharing chamber 4, therefore the battery cells 2 are located in a common electrolyte system. In this way, the performance of the high-capacity battery is improved, and the cycle life thereof is prolonged.

It should be noted that in the present embodiment, in order to ensure the welding operability between the housing 1 of the high-capacity battery and the hollow member 51 and the reliability after welding, since the housing 1 of the battery cell 2 is made of an aluminum material, the hollow member 51 and the housing 1 of the high-capacity battery are also made of the aluminum material.

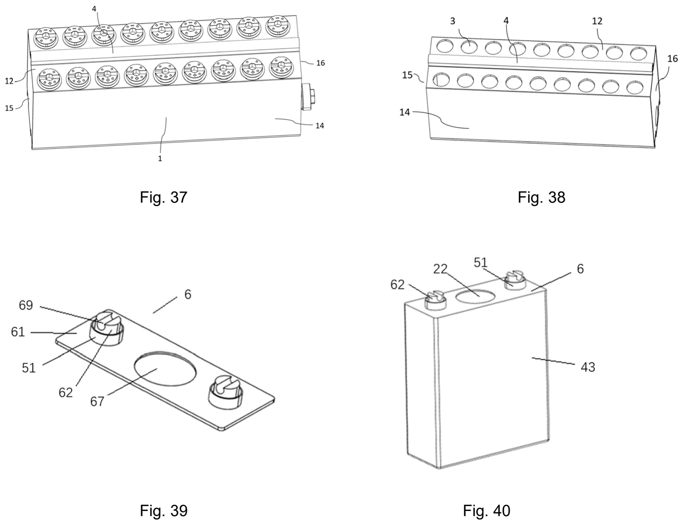

The housing 1 of the high-capacity battery may be formed in the following three embodiments:
1. As shown in Fig. 35, the housing 1 includes a cylinder body 11, a first cover plate 12 and a second cover plate 13; both the top and the bottom of the cylinder body 11 are open, the first cover plate 12 is hermetically fixed (welded) to the top of the cylinder body 11, and the second cover plate 13 is hermetically fixed (welded) to the bottom of the cylinder body 11; the first cover plate 12 is provided with 2N first through holes 3; meanwhile, at least one of the first cover plate 12 and the second cover plate 13 is provided with one sharing chamber 4, and the sharing chamber 4 may be integrally formed with the first cover plate 12 and the second cover plate 13;
2. as shown in Fig. 36, the housing 1 includes a cylinder body 11, a third cover plate 15 and a fourth cover plate 16; both the front and the back of the cylinder body 11 are open, the third cover plate 15 is hermetically fixed (welded) to the front of the cylinder body 11, and the fourth cover plate 16 is hermetically fixed (welded) to the back of the cylinder body 11; and at least one of the top of the cylinder body 11 and the bottom of the cylinder body 11 is provided with an integrally formed sharing chamber 4;
3. as shown in Fig. 37 and Fig. 38, the housing 1 includes a U-shaped shell 14, a first cover plate 12, a third cover plate 15 and a fourth cover plate 16; and the top, the front and the back of the U-shaped shell 14 are all open, the first cover plate 12 is hermetically fixed (welded) to the top of the U-shaped shell 14, and the third cover plate 15 and the fourth cover plate 16 are hermetically fixed (welded) to the front and back of the U-shaped shell 14, respectively; the first cover plate 12 is provided with 2N first through holes 3; and at least one of the first cover plate 12 and the bottom of the U-shaped shell 14 is provided with one sharing chamber 4, and the sharing chamber 4 may be integrally formed with the first cover plate 12 and the U-shaped shell 14.

In the housing 1 of the above three embodiments, the cylinder body 11 and the U-shaped shell 14 may be spliced by welding, and may also be integrally formed by casting or stamping, and in order to ensure the sealing property while facilitating the processing, the embodiment adopts an integrally formed.

Finally, in order to reduce the problem of thermal runaway caused by an excessively high local temperature of the electrode terminals 62 of the battery cells 2 on the high-capacity battery, heat transfer tubes are installed on the electrode terminals 62 of the same polarity on the battery cells 2 of the high-capacity battery in the present embodiment.

Embodiment 12 to Embodiment 18 provide an upper cover assembly, a related cell battery and a high-capacity battery.

The basic design idea of the upper cover assembly is:
In Embodiment 12 to Embodiment 18, the structure of the upper cover assembly of the battery cell is redesigned. The upper cover assembly includes a cover plate body, two electrode terminals, and two hollow members corresponding to the positions of the two electrode terminals; and one end of the hollow member is hermetically connected with a region on a housing of a high-capacity battery that corresponds to a first through hole corresponding thereto, and the other end thereof is hermetically connected to the upper cover assembly of the battery cell, thereby solving the problem of pseudo welding or welding failure occurring during laser fusion welding of the housings of high-capacity batteries and the upper cover assemblies of battery cells due to the fact that processing errors and assembly errors result in excessively large gaps between the housings of some high-capacity batteries and the upper cover assemblies of the battery cells during mass production of the high-capacity batteries.

The region corresponding to the first through hole is a peripheral region on an outer surface of the housing that corresponds to any first through hole; or the region corresponding to the first through hole is a hole wall of the first through hole.

The upper cover assembly in Embodiment 12 to Embodiment 18 has basically the same structure and manufacturing process as an upper cover assembly used by an commercially available prismatic lithium ion battery, except that:
the cover plate body needs to be provided with two hollow members, and the hollow members need to be kept insulated from the electrode terminals; and
the electrode terminal is longer than an electrode terminal in the commercially available prismatic lithium ion battery, the electrode terminal may be processed to a required length during processing, the electrode terminal may also has a consistent length of the electrode terminal of the existing commercially available prismatic lithium ion battery, and an electrode terminal adapter is added by laser fusion welding on this basis, so as to enable the electrode terminal extend out of the housing of the high-capacity battery during the assembly of the high-capacity battery.

The hollow member is a thin-walled tubular structure, which may be hermetically connected with an upper cover plate of the battery cell and the housing of the high-capacity battery respectively by bonding, riveting or welding. A horizontal cross section of the hollow member may take the shape of a rectangular ring or a circular ring, and in order to better fit the shape of the first through hole and the shape of the electrode terminal, the cross section of the hollow member generally takes the shape of a circular ring.

The upper cover assembly, the battery cell using the upper cover assembly, and the high-capacity battery are described below in conjunction several embodiments.

### Embodiment 12

As shown in Fig. 15 and Fig. 39, in the present embodiment, the upper cover assembly 6 includes a cover plate body 61, an electrode terminal 62 and a gas hole 67, wherein two electrode terminals 62 are provided, and the gas hole 67 formed in the cover plate body 61 and located between the two electrode terminals 62; two hollow members 51 are integrally formed on the cover plate body 61, and the two ends of the hollow members are both open; the two electrode terminals 62 are kept insulated from the cover plate body 61, and extend out of a housing 1 of the high-capacity battery after passing through the respective corresponding hollow members 51, and the two electrode terminals 62 are kept insulated from the hollow members 51; and the portion of the hollow member 51 that is away from the cover plate body may be bent outwards and is hermetically connected with a peripheral region corresponding to a first through hole 3 on the housing 1.

The insulation between the two electrode terminals 62 and the cover plate body 61, and between the two electrode terminals 62 and the hollow members 51 may be kept by pouring insulating glue or providing an insulating rubber sleeve.

There are a variety of hermetical connection manners, bonding and riveting. However, with respect to the welding manner, the bonding reliability is poor, and the riveting manner is inconvenient to assemble, therefore the hollow member is hermetically connected with the housing by welding in the present embodiment.

In addition to integrally forming the hollow member on the cover plate body, in some other embodiments, the hollow member may be fixed to the cover plate body by welding, but the manner is relatively cumbersome and inefficient compared with the integral forming manner.

In the present embodiment, the upper cover assembly in the present embodiment may also be optimized as follows:
1. in order to avoid the problem of thermal runaway of each battery cell caused by an excessively high local temperature of the electrode terminal 62, a through slot 69 for mounting a heat transfer tube is formed in the portion of the electrode terminal 62 that extends out of the housing 1.
   The cross section of the through slot 69 may be designed to be U-shaped or C-shaped. Since the C-shaped through slot 69 has a natural tension at the opening, the installation of the heat transfer tube is facilitated, and meanwhile it is conducive to clamping the heat transfer tube in the through slot more tightly, so that the heat conduction effect of a heat transfer connection member and the heat transfer tube is better. Therefore, in the present embodiment, a C shape is selected as the cross section of the through slot.
2. As shown in Fig. 5, in the present embodiment, a side wall of the hollow member 51 is further provided with a buffer deformation groove 55. The buffer deformation groove 55 not only provides a certain deformation margin for hermetical fixing, but also may compensate for a coaxiality deviation between the electrode terminal of the battery cell and the first through hole corresponding thereto, and the deformation margin may be used for solving the problem that an excessively large gap between the housing and the battery cell is not conducive to welding; and meanwhile, when the high-capacity battery is subjected to an external force or its own vibration, the buffer deformation groove itself has a certain buffer effect, thereby ensuring the reliability of the hermetical fixing.
3. In the present embodiment, an outer surface of the electrode terminal may also be engraved with knurls. When insulating glue is poured between the electrode terminal and the hollow member and between the electrode terminal and the hollow member, the insulating glue may be stably attached to and cured therein.

In some other embodiments, in addition to a self-made upper cover assembly 6, two hollow members may also be welded on an existing finished-product upper cover assembly. In order to enable the electrode terminal of the existing finished-product upper cover assembly to extend out, an electrode terminal adapter 21 may be additionally arranged on an existing electrode terminal 62 of the finished-product upper cover assembly by screw connection or welding, so as to ensure that the electrode terminal 62 may extend out of the housing 1. A horizontal cross section of the electrode terminal adapter 21 may be cylindrical or square.

The self-made upper cover assembly is used, the through slot 69 may be directly formed in the electrode terminal 62; and
The finished-product upper cover assembly is used, the through slot 69 may be formed in the electrode terminal adapter 21.

### Embodiment 13

The present embodiment provides a battery cell 2, the specific structure thereof is shown in Fig. 6, Fig. 15 and Fig. 40, and the battery cell 2 includes an outer cylinder 43, an upper cover assembly 6, a lower cover assembly 7, and an electrode assembly; and
the upper and lower ends of the outer cylinder 43 are both open, the upper cover assembly 6 and the lower cover assembly 7 are fixed to the upper and lower open ends of the outer cylinder 43 by welding, so as to form a sealed inner cavity of the battery cell, the electrode assembly is installed in the sealed inner cavity of the battery cell, and the electrode assembly is connected with an electrode terminal in the upper cover assembly 6; and the sealed inner cavity of the battery cell 2 is filled with electrolyte.

The upper cover assembly 6 in the present embodiment uses the same structure as that in Embodiment 12.

As shown in Fig. 40, a gas hole may be an explosion venting portion 22 of the battery cell, and the explosion venting portion may be an explosion venting membrane or an explosion venting valve. As shown in Fig. 6, the gas hole may also be a sealing and unpacking mechanism 8, and the sealing and unpacking mechanism 8 is opened under the action of electrolyte or under the action of an external force, so as to form a through hole, and the form of the sealing and unpacking mechanism 8 may refer to the patent CN218525645U.

The structure of the battery cell is similar to that of a commercially available prismatic lithium ion battery, except that a hollow member needs to be added in the upper cover assembly, and there are two embodiments to actually manufacture the battery cell in the present embodiment:
First embodiment: an improvement may be performed on the commercially available prismatic lithium ion battery, that is, two hollow members are directly welded on the upper cover assembly in the commercially available prismatic lithium ion battery by welding, and then the electrode terminal is kept insulated from the hollow member by pouring insulating glue or providing an insulating rubber sleeve. However, this manner requires labor and time and is less efficient.
Second embodiment: the battery cell may be assembled voluntarily, the upper cover assembly of the battery cell needs to be re-manufactured, that is, two hollow members need to be integrally formed on the upper cover assembly, and the electrode terminal is kept insulated from the hollow member by pouring insulating glue or providing an insulating rubber sleeve. In the present embodiment, the gas hole of the upper cover assembly needs to use a sealing and unpacking mechanism. Other parts and components of the battery cell may be kept consistent with those of the commercially available prismatic lithium ion battery, and the assembly process of the battery cell is basically the same as that of the commercially available prismatic lithium ion battery.

### Embodiment 14

The present embodiment provides a high-capacity battery. As shown in Fig. 15 and Fig. 18, the high-capacity battery includes a housing 1, and a battery cell 2 having the same structure as that in Embodiment 13, wherein N battery cells 2 are provided, wherein N is greater than or equal to 2; the N battery cells 2 are arranged side by side and are integrally arranged in the housing 1; the top of the housing 1 is provided with one sharing chamber 4; the portion of a hollow member 51 of an upper cover assembly 6 in the battery cell 2 that is away from a cover plate body may be bent outwards and is hermetically welded with a peripheral region corresponding to a first through hole 3 on the housing 1; an electrode terminal of the battery cell 2 extends out of the housing 1, and the electrode terminal is kept insulated from the hollow member 51.

It should be noted that in the present embodiment, in order to ensure the welding operability between the housing of the high-capacity battery and the hollow member and the reliability after welding, since the housing of the battery cell is made of an aluminum material, the hollow member and the housing of the high-capacity battery are also made of the aluminum material.

In the present embodiment, a gas hole on the battery cell is a sealing and unpacking mechanism, and the sealing and unpacking mechanism may be opened under the action of electrolyte or under the action of an external force, so that a gas region in the inner cavity of the battery cell 2 communicates with the sharing chamber.

It should be emphasized that an exhaust valve may be arranged on the sharing chamber to periodically discharge gases in each battery cell, thereby avoiding a series of problems affecting the comprehensive performance of the high-capacity battery due to the inability to discharge the gases, for example, the swelling of a battery cell shell. An exhaust valve and an explosion venting membrane may also be arranged on a gas chamber, or only the exhaust valve is arranged; the exhaust valve may be manually or automatically opened, and the exhaust valve may be periodically opened to periodically discharge the gases in each battery cell, thereby avoiding the series of problems affecting the comprehensive performance of the high-capacity battery due to the inability to discharge the gases, for example, the swelling of the battery cell shell. When the exhaust valve and the explosion venting membrane are arranged at the same time, the exhaust valve and the explosion venting membrane are located on the two ends of the gas chamber, and the explosion venting membrane is used for enabling a thermal runaway flue gas to break through the thermal runaway to be discharged from the gas chamber when thermal runaway occurs in any battery cell, so that the high-capacity battery has higher safety performance.

In order to reduce the problem of thermal runaway caused by an excessively high local temperature of the electrode terminals of the battery cells on the high-capacity battery, heat transfer tubes are installed on the electrode terminals of the same polarity on the battery cells of the high-capacity battery in the present embodiment.

The housing of the high-capacity battery may be formed in the following three embodiments:
1. Referring to Fig. 18 and Fig. 19, the housing 1 includes a cylinder body 11, a first cover plate 12 and a second cover plate 13; both the top and the bottom of the cylinder body 11 are open, the first cover plate 12 is hermetically fixed (welded) to the top of the cylinder body 11, and the second cover plate 13 is hermetically fixed (welded) to the bottom of the cylinder body 11; and
   one sharing chamber and 2N first through holes 3 are integrally formed on the first cover plate 12, and the 2N first through holes 3 are located on the two sides of the sharing chamber.
2. Referring to Fig. 18, Fig. 19 and Fig. 20, the housing 1 includes a U-shaped shell 14, a first cover plate 12, a third cover plate 15 and a fourth cover plate 16; and the top, the front and the back of the U-shaped shell 14 are all open, the first cover plate 12 is hermetically fixed (welded) to the top of the U-shaped shell 14, and the third cover plate 15 and the fourth cover plate 16 are hermetically fixed (welded) to the front and back of the U-shaped shell 14, respectively; and
   one sharing chamber and 2N first through holes 3 are integrally formed on the first cover plate 12, and the 2N first through holes 3 are located on the two sides of the sharing chamber.
3. Referring to Fig. 18, the housing 1 includes a cylinder body 11, a third cover plate 15 and a fourth cover plate 16; both the front and back of the cylinder body 11 are open, the third cover plate 15 is hermetically fixed (welded) to the front of the cylinder body 11, and the fourth cover plate 16 is hermetically fixed (welded) to the back of the cylinder body; and
one sharing chamber and 2N first through holes 3 are integrally formed at the top of the cylinder body 11, and the 2N first through holes 3 are located on the two sides of the sharing chamber.

In the housing of the above three embodiments, the cylinder body 11 and the U-shaped shell 14 may be spliced by welding, and may also be integrally formed by casting or stamping, and in order to ensure the sealing property while facilitating the processing, the embodiment adopts an integrally formed.

### Embodiment 15

Referring to Fig. 15, the structure of the high-capacity battery in the present embodiment is basically the same as that in Embodiment 14, except that: the gas hole of the battery cell is an explosion venting portion, at this time, the sharing chamber covers the explosion venting portion, and when thermal runaway occurs in the battery cell, the thermal runaway flue gas may be discharged from the sharing chamber after breaking through the explosion venting portion.

### Embodiment 16

The present embodiment provides a battery cell 2, the specific structure thereof is shown in Fig. 6, Fig. 7 and Fig. 40, and the battery cell 2 includes an outer cylinder 43, an upper cover assembly 6, a lower cover assembly 7, and an electrode assembly; and
the upper and lower ends of the outer cylinder 43 are both open, the upper cover assembly 6 and the lower cover assembly 7 are fixed to the upper and lower open ends of the outer cylinder 43 by welding, so as to form a sealed inner cavity of the battery cell, the electrode assembly is installed in the sealed inner cavity of the battery cell, and the electrode assembly is connected with an electrode terminal in the upper cover assembly 6; and the sealed inner cavity of the battery cell 2 is filled with electrolyte.

The upper cover assembly 6 in the present embodiment uses the same structure as that in Embodiment 12.

In the present embodiment, a sealing and unpacking mechanism 8 is arranged on the lower cover assembly, the sealing and unpacking mechanism 8 is opened under the action of electrolyte or under the action of an external force, so as to form a through hole, and the form of the sealing and unpacking mechanism 8 may refer to the patent CN218525645U.

The structure of the battery cell is similar to that of the commercially available prismatic lithium ion battery, except that a hollow member needs to be added in the upper cover assembly, a sealing and unpacking mechanism needs to be added on the lower cover assembly, and there are two embodiments to actually manufacture the battery cell in the present embodiment:
First embodiment: an improvement may be performed on the commercially available prismatic lithium ion battery, that is, two hollow members are directly welded on the upper cover assembly in the commercially available prismatic lithium ion battery by welding, and then the electrode terminal is kept insulated from the hollow member by pouring insulating glue or providing an insulating rubber sleeve. Then, a hole is formed in the lower cover assembly, and then a sealing and unpacking mechanism is arranged at the opening. However, this manner requires labor and time and is less efficient.
Second embodiment: the battery cell may be assembled voluntarily, the upper cover assembly of the battery cell needs to be re-manufactured, that is, two hollow members need to be integrally formed on the upper cover assembly, and the electrode terminal is kept insulated from the hollow member by pouring insulating glue or providing an insulating rubber sleeve; the lower cover assembly also needs to be re-manufactured, that is, a sealing and unpacking mechanism is arranged on the lower cover assembly; and **In** the present embodiment, the gas hole of the upper cover assembly also needs to use the sealing and unpacking mechanism.

Other parts and components of the battery cell may be kept consistent with those of the commercially available prismatic lithium ion battery, and the assembly process of the battery cell is basically the same as that of the commercially available prismatic lithium ion battery.

### Embodiment 17

As shown in Fig. 21, the structure of the high-capacity battery in the present embodiment is basically the same as that in Embodiment 14, and there is one sharing chamber, except that the battery cell uses the structure in Embodiment 16; and the sharing chamber is arranged at the bottom of the housing for communicating electrolyte regions in the inner cavities of the battery cells. Since the battery cells share the electrolyte, a plurality of battery cells need to be arranged in parallel in the present embodiment.

When the sealing and unpacking mechanism 8 on the lower cover assembly of each battery cell is opened under the action of electrolyte or under the action of an external force, the electrolyte regions of the battery cells communicate with the sharing chamber, so that the battery cells are located in a common electrolyte system, thereby improving the performance of the high-capacity battery and prolonging the cycle life thereof.

The housing of the high-capacity battery may be formed in the following three embodiments:
1. Referring to Fig. 22 and Fig. 24, the housing 1 includes a cylinder body 11, a first cover plate 12 and a second cover plate 13; both the top and the bottom of the cylinder body 11 are open, the first cover plate 12 is hermetically fixed (welded) to the top of the cylinder body 11, and the second cover plate 13 is hermetically fixed (welded) to the bottom of the cylinder body 11; and
   the first cover plate 12 is provided with 2N first through holes 3, and one sharing chamber is integrally formed on the first cover plate 12.
2. Referring to Fig. 22 and Fig. 23, the housing 1 includes a U-shaped shell 14, a first cover plate 12, a third cover plate 15 and a fourth cover plate 16; and the top, the front and the back of the U-shaped shell 14 are all open, the first cover plate 12 is hermetically fixed (welded) to the top of the U-shaped shell 14, and the third cover plate 15 and the fourth cover plate 16 are hermetically fixed (welded) to the front and back of the U-shaped shell 14, respectively; and
   the first cover plate 12 is provided with 2N first through holes 3, and one sharing chamber is integrally formed at the bottom of the U-shaped shell 14.
3. Referring to Fig. 22, the housing 1 includes a cylinder body 11, a third cover plate 15 and a fourth cover plate 16; both the front and back of the cylinder body 11 are open, the third cover plate 15 is hermetically fixed (welded) to the front of the cylinder body 11, and the fourth cover plate 16 is hermetically fixed (welded) to the back of the cylinder body; and
the top of the cylinder body 11 is provided with 2N first through holes 3, and one sharing chamber is integrally formed at the bottom of the U-shaped shell 14.

In the housing of the above three embodiments, the cylinder body 11 and the U-shaped shell 14 may be spliced by welding, and may also be integrally formed by casting or stamping, and in order to ensure the sealing property while facilitating the processing, the embodiment adopts an integrally formed.

### Embodiment 18

As shown in Fig. 25, in the present embodiment, on the basis of Embodiment 17 (the electrolyte may be shared), one sharing chamber 4 is additionally arranged at the top of the housing, that is to say, the high-capacity battery in the present embodiment has two sharing chambers 4.

When the gas hole 67 in the upper cover assembly 6 of the battery cell 2 is a sealing and unpacking mechanism 8, the sealing and unpacking mechanism is opened under the action of electrolyte or under the action of an external force, so that the gas region in the inner cavity of the battery cell 2 communicates with the additionally provided sharing chamber.

When the gas holes 67 in the upper cover assembly 6 of the battery cell 2 is an explosion venting portion, the sharing chamber covers the explosion venting portion of each battery cell 2, so as to ensure that the thermal runaway flue gas in the battery cell is discharged from the additionally provided sharing chamber after breaking through an explosion venting port.

The housing of the high-capacity battery may be formed in the following three embodiments:
1. Referring to Fig. 26, the housing 1 includes a cylinder body 11, a first cover plate 12 and a second cover plate 13; both the top and the bottom of the cylinder body 11 are open, the first cover plate 12 is hermetically fixed (welded) to the top of the cylinder body 11, and the second cover plate 13 is hermetically fixed (welded) to the bottom of the cylinder body 11; and
   referring to Fig. 19, the first cover plate 12 is provided with 2N first through holes 3 and is integrally formed with one sharing chamber, and referring to Fig. 24, one sharing chamber is also integrally formed on the second cover plate 13.
2. Referring to Fig. 23 and Fig. 26, the housing 1 includes a U-shaped shell 14, a first cover plate 12, a third cover plate 15 and a fourth cover plate 16; and the top, the front and the back of the U-shaped shell 14 are all open, the first cover plate 12 is hermetically fixed (welded) to the top of the U-shaped shell 14, and the third cover plate 15 and the fourth cover plate 16 are hermetically fixed (welded) to the front and back of the U-shaped shell 14, respectively; and
   referring to Fig. 19, the first cover plate 12 is provided with 2N first through holes 3 and is integrally formed with one sharing chamber, and referring to Fig. 23, one sharing chamber is also integrally formed at the bottom of the U-shaped shell 14.
3. Referring to Fig. 26, the housing 1 includes a cylinder body 11, a third cover plate 15 and a fourth cover plate 16; both the front and back of the cylinder body 11 are open, the third cover plate 14 is hermetically fixed (welded) to the front of the cylinder body 11, and the fourth cover plate 16 is hermetically fixed (welded) to the back of the cylinder body; and
the top of the cylinder body 11 is provided with 2N first through holes 3 and is integrally formed with one sharing chamber, and one sharing chamber is also integrally formed at the bottom of the cylinder body 11.

In the housing of the above three embodiments, the cylinder body 11 and the U-shaped shell 14 may be spliced by welding, and may also be integrally formed by casting or stamping, and in order to ensure the sealing property while facilitating the processing, the embodiment adopts an integrally formed.

## Claims

1. A high-capacity battery, comprising a housing and a battery cell, wherein a plurality of battery cells are provided, wherein the plurality of battery cells are arranged side by side and are integrally arranged in the housing; the battery cell has an electrolyte region and a gas region therein; and the electrolyte regions of the plurality of battery cells communicate with each other, so that the plurality of battery cells are located in one electrolyte system;
a first through hole is formed in a top of the housing at a position corresponding to an electrode terminal of each battery cell of the plurality of battery cells;
the electrode terminal of the battery cell extends out of the top of the housing via the corresponding first through hole, so as to implement a parallel connection between the plurality of battery cells;
a hollow member is arranged between an upper cover assembly of the battery cell and the first through hole at the top of the housing that corresponds to the battery cell; and
the hollow member is sleeved on the electrode terminal, a bottom of the hollow member is fixedly connected with the upper cover assembly of the battery cell, a top of the hollow member is in tight fit with the first through hole, and the hollow member and the first through hole are welded and sealed by laser fusion welding; and a fusion welding region between the hollow member and the first through hole is located between an outer edge of the top of the hollow member and an inner edge of the first through hole.

2. The high-capacity battery as claimed in claim 1, wherein the hollow member is integrally formed on the upper cover assembly of the battery cell.

3. The high-capacity battery as claimed in claim 2, wherein a pipe wall of the hollow member is provided with a buffer deformation groove.

4. The high-capacity battery as claimed in any one of claims 1-3, wherein a bottom of the housing is provided with a first channel configured to communicate the electrolyte regions in the plurality of battery cells.

5. The high-capacity battery as claimed in claim 4, wherein the top of the housing is provided with a second channel for communicating the gas regions in the plurality of battery cells.

6. The high-capacity battery as claimed in claim 4, wherein the top of the housing is provided with a second channel covering an explosion venting portion of the battery cell.

7. A battery cell, which is applied to a high-capacity battery and comprises an upper cover assembly, a cylinder body, a lower cover assembly and an electrode assembly, wherein the upper cover assembly, the cylinder body and the lower cover assembly constitute a closed outer cylinder, the electrode assembly is located in the closed outer cylinder, and the closed outer cylinder is internally provided with electrolyte;
the upper cover assembly comprises a cover plate body, and two electrode terminals and a hollow member, which two hollow members are provided, which are arranged on the cover plate body;
the two electrode terminals are respectively connected with a positive electrode sheet and a negative electrode sheet of the electrode assembly, and both are kept insulated from the cover plate body, the two hollow members are configured to respectively receive the two electrode terminals passing there through, and an outer diameter of the hollow member is less than or equal to an aperture of a first through hole of the high-capacity battery; and
the lower cover assembly is provided with a first sealing and unpacking mechanism configured to form the first through hole in a bottom of the cylinder body.

8. The battery cell as claimed in claim 7, wherein the hollow member is integrally formed on the cover plate body.

9. The battery cell as claimed in claim 7 or 8, wherein the cover plate body of the upper cover assembly is provided with a second sealing and unpacking mechanism configured to form a second through hole, and the second sealing mechanism is located between the two electrode terminals.

10. The battery cell as claimed in claim 7 or 8, wherein the cover plate body of the upper cover assembly is provided with an explosion venting portion, and the explosion venting portion is located between the two electrode terminals.

11. A sealing connector, which is configured to hermetically connect a housing of a high-capacity battery with an upper cover plate of a battery cell of the high-capacity battery, wherein a first through hole configured to enable an electrode terminal of the battery cell of the high-capacity battery to extend out is formed in the housing of the high-capacity battery, wherein a plurality of first through holes are provided; the sealing connector comprises a hollow member; a bottom of the hollow member is hermetically connected with a first region of the battery cell of the high-capacity battery, and a top of the hollow member is hermetically connected with a second region of the housing of the high-capacity battery;
the first region is a region located at a periphery of an electrode terminal in the upper cover plate of the battery cell of the high-capacity battery; and
the second region is a region corresponding to the first through hole on the housing of the high-capacity battery.

12. The sealing connector as claimed in claim 11, wherein an outer side of the bottom of the hollow member is provided with a first annular plate to be welded with the upper cover plate of the battery cell of the high-capacity battery.

13. The sealing connector as claimed in claim 12, wherein the hollow member and the first annular plate are integrally formed.

14. The sealing connector as claimed in claim 11, wherein an outer side of the top of the hollow member is provided with a second annular plate to be welded with the second region, and a third annular plate arranged on an inner side of the bottom of the hollow member to be welded with the first region; and an inner diameter of the third annular plate is greater than an outer diameter of an insulating sealing gasket arranged at the electrode terminal of the battery cell of the high-capacity battery.

15. The sealing connector as claimed in claim 14, wherein the hollow member, the second annular plate and the third annular plate are integrally formed.

16. The sealing connector as claimed in any one of claims 12-15, wherein a side wall between the top of the hollow member and the bottom of the hollow member is provided with a buffer deformation groove.

17. A high-capacity battery, comprising a housing and a battery cell, wherein N battery cells are provided, wherein N is greater than or equal to 2; and the N battery cells are arranged in parallel and are integrally arranged in the housing; the housing is provided with a sharing chamber in communication with an inner cavity of the battery cell, wherein:
the high-capacity battery further comprises a hollow member as claimed in any one of claims 11-16, wherein 2N hollow members are provided; and
a bottom of the hollow member is hermetically connected with a first region of the battery cell, and a top of the hollow member is hermetically connected with a second region of the housing; and an electrode terminal of the battery cell extends out of the hollow member, and the electrode terminal of the battery cell is kept insulated from the hollow member.

18. The high-capacity battery as claimed in claim 17, wherein one sharing chamber is provided, is integrally formed at a bottom of the housing, and communicates with an electrolyte region in an inner cavities of the battery cell;
or, one sharing chamber is provided, is integrally formed at a top of the housing, and communicates with a gas region in an inner cavities of the battery cell;
or, one sharing chamber is provided, is integrally formed at a top of the housing, and covers an explosion venting port of the battery cell, so as to ensure that a thermal runaway flue gas in the battery cell is discharged from the sharing chamber after breaking through the explosion venting port.

19. The high-capacity battery as claimed in claim 17, wherein two sharing chambers are provided, one sharing chamber is integrally formed at a bottom of the housing and communicates with the an electrolyte region in an inner cavities of the battery cell, and the other sharing chamber is integrally formed at a top of the housing and communicates with a gas region in an inner cavities of the battery cell;
or, two sharing chambers are provided, one sharing chamber is integrally formed at a bottom of the housing and communicates with an electrolyte region in an inner cavities of the battery cell, and the other sharing chamber is integrally formed at a top of the housing and covers an explosion venting port of the battery cell, so as to ensure that the thermal runaway flue gas in the battery cell is discharged from the sharing chamber after breaking through the explosion venting port.

20. An upper cover assembly, comprising a cover plate body and an electrode terminal, wherein two electrode terminals are provided, wherein the upper cover assembly further comprises a hollow member, wherein two hollow members are provided;
two ends of the hollow member are both open, one open end of the hollow member is connected with an electrode terminal hole of the cover plate body, and another open end of the hollow member is connected with a housing of a high-capacity battery;
the two electrode terminals are correspondingly inserted into the two hollow members;
an insulating sleeve is arranged between the electrode terminal and the hollow member, so as to realize the insulation between the hollow member and the electrode terminal; and
the insulating sleeve is provided with a fixing portion, so that the hollow member and the electrode terminal are hermetically connected by the insulating sleeve.

21. The upper cover assembly as claimed in claim 20, wherein the insulating sleeve and the fixing portion are integrally formed by injection molding.

22. The upper cover assembly as claimed in claim 21, wherein a side wall of the hollow member is provided with at least one second through hole, and the fixing portion is composed of a fixing sleeve sleeved on the outer side of the hollow member and an insulating connection column embedded into the at least one second through hole, and two ends of the insulating connection column are respectively connected with the fixing sleeve and the insulating sleeve.

23. The upper cover assembly as claimed in claim 21, wherein a side wall of the hollow member is provided with at least one second through hole, and the fixing portion is a columnar protrusion arranged on an outer wall of the insulating sleeve and embedded into the at least one second through hole.

24. The upper cover assembly as claimed in claim 21, wherein a side wall of the hollow member is provided with a first annular groove protruding outwards, and the fixing portion is a first annular protrusion arranged on an outer wall of the insulating sleeve and embedded into the first annular groove.

25. The upper cover assembly as claimed in any one of claims 21-24, wherein an outer wall of the electrode terminal is provided with a second annular groove, and the fixing portion further comprises a second annular boss arranged on an inner wall of the insulating sleeve and embedded into the second annular groove.

26. The upper cover assembly as claimed in claim 25, wherein the cover plate body is provided with a gas hole, and the gas hole is sealed by a sealing and unpacking mechanism that is formed by injection moulding, or the gas hole is provided with an explosion venting portion.

27. The upper cover assembly as claimed in any one of claims 20-24, wherein the hollow member is integrally formed on the cover plate body.

28. The upper cover assembly as claimed in claim 27, wherein a portion of the hollow member that is away from the cover plate body may be bent, and a bent region is welded and sealed with a peripheral region of a first through hole on the housing of the high-capacity battery.

29. The upper cover assembly as claimed in claim 27, wherein a side wall of the hollow member is provided with a buffer deformation groove, and a through slot for mounting a heat transfer tube is formed in the electrode terminal.

30. A battery cell, comprising an outer cylinder, an upper cover assembly, a lower cover assembly and an electrode assembly, wherein the upper cover assembly is the upper cover assembly as claimed in any one of claims 20-29.

31. An upper cover assembly, comprising an electrode terminal and a gas hole, wherein two electrode terminals are provided, the gas hole located between the two electrode terminals, wherein the upper cover assembly further comprises a cover plate body and a hollow member, wherein two hollow members are provided, the two hollow members arranged on the cover plate body;
two ends of the hollow member are both open; and
the two electrode terminals are both kept insulated from the cover plate body, the two hollow members are configured to respectively receive the two electrode terminals passing there through, and the electrode terminal is kept insulated from the hollow member.

32. The upper cover assembly as claimed in claim 31, wherein the hollow member is integrally formed on the cover plate body.

33. The upper cover assembly as claimed in claim 32, wherein a through slot for mounting a heat transfer tube is formed in the electrode terminal.

34. The upper cover assembly as claimed in any one of claims 31-33, wherein a portion of the hollow member that is away from the cover plate body may be bent to be welded and sealed with a peripheral region of a first through hole on a housing of a high-capacity battery.

35. The upper cover assembly as claimed in claim 34, wherein a side wall of the hollow member is provided with a buffer deformation groove.

36. The upper cover assembly as claimed in claim 32, wherein an outer surface of the electrode terminal is provided with a knurl.

37. A battery cell, comprising a cylinder body, an upper cover assembly, a lower cover assembly and an electrode assembly, wherein the upper cover assembly is the upper cover assembly as claimed in any one of claims 31-36.

38. The battery cell as claimed in claim 37, wherein the lower cover assembly is provided with a sealing and unpacking mechanism, and the sealing and unpacking mechanism may be opened under the action of electrolyte or under the action of an external force.

39. The battery cell as claimed in claim 37 or 38, wherein a gas hole in the upper cover assembly is an explosion venting portion.

40. The battery cell as claimed in claim 37 or 38, wherein a gas hole in the upper cover assembly is a sealing and unpacking mechanism, and the sealing and unpacking mechanism may be opened under the action of electrolyte or under the action of an external force.

41. A high-capacity battery, comprising a housing and a battery cell as claimed in claim 37, wherein a plurality of battery cells are provided, wherein the plurality of battery cells are arranged side by side and are integrally arranged in the housing; a top of the housing is provided with a sharing chamber; and
a portion of a hollow member on the battery cell that is away from a cover plate body is hermetically connected with a region corresponding to a first through hole on the housing; and an electrode terminal of the battery cell extends out of the housing.

42. The high-capacity battery as claimed in claim 41, wherein a gas hole on the battery cell is a through hole, the sharing chamber is integrally formed at the top of the housing, and the sharing chamber communicates with a gas region of the battery cell via the through hole of the battery cell.

43. The high-capacity battery as claimed in claim 41, wherein a gas hole on the battery cell is an explosion venting portion, the sharing chamber is integrally formed at the top of the housing, and the sharing chamber covers the explosion venting portion of the battery cell, so as to ensure that a thermal runaway flue gas in the battery cell is discharged from the sharing chamber after breaking through the explosion venting portion.

44. A high-capacity battery, comprising a housing and a battery cell as claimed in claim 38, wherein a plurality of battery cells are provided, wherein the plurality of battery cells are arranged side by side and are integrally arranged in the housing; a bottom of the housing is provided with a sharing chamber for communicating electrolyte regions of the plurality of battery cells; and
a portion of a hollow member on the battery cell that is away from a cover plate body is hermetically connected with a region corresponding to a first through hole on the housing; and an electrode terminal of the battery cell extends out of the housing.

45. A high-capacity battery, comprising a housing and a battery cell as claimed in claim 38, wherein a plurality of battery cells are provided, wherein the plurality of battery cells are arranged side by side and are integrally arranged in the housing; a gas hole of the battery cell is a through hole;
the housing is provided with two sharing chambers, one sharing chamber of the two sharing chambers is integrally formed at the bottom of the housing for communicating electrolyte regions in inner cavities of the plurality of battery cells, and the other sharing chamber of the two sharing chambers is integrally formed at the top of the housing for communicating gas regions in an inner cavities of the plurality of battery cells; and
a portion of a hollow member on the battery cell that is away from a cover plate body is hermetically connected with a region corresponding to a first through hole on the housing; and an electrode terminal of the battery cell extends out of the housing.

46. A high-capacity battery, comprising a housing and a battery cell as claimed in claim 38, wherein a plurality of battery cells are provided, wherein the plurality of battery cells are arranged side by side and are integrally arranged in the housing; and a gas hole on the battery cell is an explosion venting portion;
the housing is provided with two sharing chambers, one sharing chamber of the two sharing chambers is integrally formed at the bottom of the housing for communicating electrolyte regions in inner cavities of the plurality of battery cells, and the other sharing chamber of the two sharing chambers is integrally formed at the top of the housing and covers the explosion venting portions of the plurality of battery cells, so as to ensure that a thermal runaway flue gas in the battery cell is discharged from the sharing chamber after breaking through the explosion venting portion; and
a portion of a hollow member on the battery cell that is away from a cover plate body is hermetically connected with a region corresponding to a first through hole on the housing; and an electrode terminal of the battery cell extends out of the housing.

47. The high-capacity battery as claimed in any one of claims 41-46, wherein heat transfer tubes are installed on the electrode terminals of the same polarity on the plurality of battery cells.
